# EUROPEAN PATENT SPECIFICATION

(11) **EP 4 239 006 B1**
(45) Date of publication and mention of the grant of the patent: **16.10.2024**
(21) Application number: 22160348.3
(22) Date of filing: 04.03.2022
(51) Int. Cl.: C08G 59/40, C08G 59/50, C08G 59/56, C09D 163/00

(54) **COATING COMPOSITION**
BESCHICHTUNGSZUSAMMENSETZUNG
COMPOSITION DE REVÊTEMENT

(43) Date of publication of application: 06.09.2023
(73) Proprietor: Jotun A/S, 3202 Sandefjord (NO)
(72) Inventor: KRINGBERG, Magne, 3230 Sandefjord (NO)
(74) Representative: Dehns

(56) References cited:
- CN-A- 107 502 132
- US-A1- 2011 027 591

## Description

This invention relates to a coating composition. In particular, the invention provides a two-component coating composition comprising an aqueous epoxy-based binder in a first component (component A) and a curing agent and a silane in a second component (component B), wherein the second component comprises less than 5 wt% water. The invention further relates to a coating system comprising the composition and to substrates coated with the coating composition.

### Background

The coating of steel with primers to prevent corrosion is well known. In particular, epoxy coatings are a widely used type of anticorrosive primer coatings. Epoxy coatings are used mainly as part of an anti-corrosive coating system on steel substrates due to outstanding adhesion towards the substrate, corrosion protection and chemical resistance.

Epoxy coating compositions are typically two-component products consisting of an epoxy component and a curing agent. The primer epoxy layer is often coated with a topcoat. Typical topcoats applied over epoxy primer layers include urethane-, polyurea-, epoxy-, alkyd-, acrylic-, polysiloxane, polyvinyl, polyester, or chlorinated polyolefin based coatings. The topcoat may also be an antifouling coating.

An important parameter for the epoxy primer layer, and indeed for the coating system as a whole, is the content of Volatile Organic Compounds (VOC). For environmental reasons, it is important to keep the VOC of a coating system to an absolute minimum.

Waterborne (WB) epoxy primers offer a route to lower VOC, however they are generally regarded to be expensive and to have a lower performance than comparable solvent borne and solvent free epoxy primers. This means that the customer would not likely buy waterborne epoxy primers if not forced to do so out of other concerns such as environmental legislation and VOC regulation. Another drawback with waterborne paints is the risk of bad film formation at adverse curing conditions, mainly conditions where it takes a long time before the water evaporates, for instance at low temperatures and high relative humidity. The consequence of improper film formation can be severe as it often requires removing the coating before repainting. Additionally, there are currently no WB epoxy primers suitable for use below the waterline on marine structures available on the marked.

US 2011/027591 A1 discloses waterborne two-component primer coating compositions comprising an epoxy-based binder; an amine based curing agent; and a silane.

It is thus an object of the invention to provide new waterborne epoxy-based coating compositions which address at least some of these above-mentioned issues. In particular, the composition should offer good anticorrosive properties, tolerance towards poorly prepared substrates such as water jetted substrates and rusted substrates and have the ability to cure and form films at low temperatures and high relative humidity (e.g. 5 °C, 90%) even when applied in a high wet-film thickness, such as 1000 µm. Furthermore, the composition should provide good intercoat adhesion in a temperature range of 5 to 40 °C and a relative humidity of 10 to 90%. Ideally, the composition should be suitable for use as an anticorrosive primer for marine structures e.g. ships.

The present inventors have unexpectedly found that the coating compositions of the present invention offer an attractive solution. In particular, the waterborne coating compositions of the invention surprisingly have very good anti-corrosive performance compared to other commercially available waterborne paints and may be suitable for use in submerged areas for example below the waterline on a marine vessel. Film formation at adverse conditions is very good, and the paint can be cured at a high film thickness down to 5 °C and 85% relative humidity while still maintaining good anticorrosive properties and good intercoat adhesion properties. The surface tolerance of the coating composition is also suitable for application and protection of steel substrates with a sub-optimal surface treatment, such as water-jetted substrates containing flash-rust and rusted substrates.

### Summary of Invention

Viewed from a first aspect, the invention provides a coating composition comprising components A and B,
wherein component A comprises:
   i) 15 to 70 wt% of one or more epoxy-based binder, relative to the total weight of component A;
   ii) 20 to 60 wt% water, relative to the total weight of component A; wherein component B comprises:
   i) an amine based curing agent comprising a cyclic structure; and
   ii) a silane
and wherein component B comprises less than 5wt% water, relative to the total weight of component B.

Viewed from another aspect, the invention provides a kit for producing a coating composition as hereinbefore defined, wherein said kit comprises:
(i) a component A comprising one or more epoxy-based binders and water; and
(ii) a component B comprising an amine based curing agent comprising a cyclic structure and a silane, wherein said second part comprises less than 5 wt% water, relative to the total weight of the second part.

Viewed from a further aspect the invention provides a coating system comprising at least two layers, wherein one layer is a primer layer made from the coating composition as hereinbefore defined and wherein the one or more additional layers are each selected from the group consisting of a primer made from the coating composition as hereinbefore defined, a shop primer, a mid-coat, a topcoat, a tiecoat, an antifouling coating, a zinc rich primer, and an intumescent coating.

Viewed from another aspect, the invention provides a substrate coated with a cured coating composition as hereinbefore defined.

### Definitions

As used herein, the term "waterborne composition" refers to a composition which comprises water as the continuous phase and main solvent in the ready-to-apply paint i.e. paint where all the necessary components are mixed together. Typically, water forms at least 65wt% of the solvent contained in the formulation, preferably at least 75wt% of the solvent is water.

As used herein the term "binder" or "binder system" refers to the film forming components of the composition. The one or more epoxy-based binders of the coating composition are the main binders in the composition, i.e. they form at least 50 wt% of the binders present, preferably at least 60 wt%, such as at least 70 wt%.

As used herein, equivalent weight pertains to the mass in grams of a reactive compound having a number of reactive groups equivalent to 1 mol. For epoxy resin based binders the equivalent weight is denoted epoxy equivalent weight (EEW) and for amine-based curing agents the equivalent weight is denoted active hydrogen equivalent weight (AHEW). Thus, the contribution from each of the epoxy-based binders, or other epoxy functional components, to the number of epoxy equivalents in the composition is defined as grams of epoxy-based compound divided by the epoxy equivalent weight of the epoxy-based compound. Likewise, for the amine-based curing agent or other compounds with active amine hydrogens, the contribution to the number of active hydrogens in the composition is defined as grams of amine functional compound divided by the active hydrogen equivalent weight of the amine functional compound.

As used herein the term "paint" refers to a composition comprising the coating composition as herein described and optionally solvent which is ready for use, e.g. for application by spraying, brush or roller. Thus, the coating composition may itself be a paint or the coating composition may be a concentrate to which solvent is added to produce a paint.

As used herein, the term emulsion refers to a fine suspension of droplets of one liquid in another in which it is not soluble or miscible. In the context of the present invention, the emulsions may be termed "oil-in-water" emulsions, i.e. wherein the dispersed phase consists of an oil-phase and the continuous phase is water. Thus, the emulsions employed in the present invention may also be termed "aqueous emulsions", meaning that they are emulsions wherein the continuous phase (i.e. the solvent) comprises water. Ideally, the solvent comprises 70 - 100 wt% water, e.g. 80 - 98 wt% water.

As used herein, the term dispersion refers to a fine suspension of solid or semisolid particles in a continuous phase, in which it is not soluble or miscible. In the context of the present invention, the dispersion may be termed "oil-in-water" dispersions if the dispersed phase consists of an oil-phase, i.e. resin, and the continuous phase is water. Thus, the dispersions employed in the present invention may also be termed "aqueous dispersions", meaning that they are dispersions wherein the continuous phase (i.e. the solvent) comprises water. Ideally, the solvent comprises 70 - 100 wt% water, e.g. 80 - 98 wt% water.

As used herein the term filler refers to a compound which increases the volume or bulk of a coating composition. The fillers are substantially insoluble in the coating composition and are dispersed therein.

As used herein the term "alkyl" refers to saturated, straight chained, branched or cyclic groups.

As used herein the term "cycloalkyl" refers to a cyclic alkyl group.

As used herein the term "alkylene" refers to a bivalent alkyl group.

As used herein the term "alkenyl" refers to unsaturated, straight chained, branched or cyclic groups.

As used herein the term "aryl" refers to a group comprising at least one aromatic ring. The term aryl encompasses fused ring systems wherein one or more aromatic ring is fused to a cycloalkyl ring. An example of an aryl group is phenyl, i.e. C₆H₅.

As used herein the term "alkaryl" refers to a group comprising an aromatic ring that is substituted with an alkyl radical. An example is methyl-, ethyl- or higher alkyl phenyls.

As used herein the term "substituted" refers to a group wherein one or more, for example up to 6, more particularly 1, 2, 3, 4, 5 or 6, of the hydrogen atoms in the group are replaced independently of each other by the corresponding number of the described substituents.

As used herein the term "arylalkyl" group refers to structural motifs comprising an aromatic ring with at least one alkyl moiety attached to the aromatic ring and wherein substituent e.g., amines are attached to the alkyl portion.

As used herein the term "polyether" refers to a compound comprising two or more -O- linkages interrupted by alkylene units.

As used herein the terms "poly(alkylene oxide)", "poly(oxyalkylene) and "poly(alkylene glycol)" refer to a compound comprising -alkylene-O- repeating units. Typically the alkylene is ethylene or propylene.

As used herein the term "volatile organic compound (VOC)" refers to a compound having a boiling point of 250 °C or less.

### Detailed description of Invention

This invention relates to a coating composition comprising two components A and B. Component A comprises one or more epoxy-based binders and water, and component B comprises an amine-based curing agent comprising a cyclic structure and a silane, wherein component B comprises less than 5 wt% water.

### Component A

Component A comprises one or more epoxy-based binders and water.

### Component B

Component B comprises an amine based curing agent comprising a cyclic structure and at least one silane. It is a further requirement that component B comprises less than 5 wt% water, relative to the total weight of component B. Preferably, component B comprises less than 3wt%, more preferably less than 2.5 wt%, even more preferably less than 0.5 wt%, such as less than 0.1 wt% water, relative to the total weight of component B. Ideally, component B is essentially free of water.

### Raw materials

### Epoxy-based binder

Component A comprises one or more epoxy-based binders, which may be preferably selected from aromatic or aliphatic epoxy-based binders, preferably comprising more than one epoxy group per molecule. The epoxy-groups may be in an internal or terminal position on the epoxy-based binder or on a cyclic structure incorporated into the epoxy-based binder. Preferably the epoxy-based binder comprises at least two epoxy groups so that a crosslinked network can be formed by reaction with a curing agent that has at least three sites reactive towards epoxy groups.

Suitable aliphatic epoxy-based binders include epoxy and modified epoxy binders selected from cycloaliphatic diglycidyl ethers such as diglycidyl ethers based on hydrogenated bisphenol A, hydrogenated bisphenol F, and dicyclopentadiene, glycidyl ethers such as polyglycidyl ethers of polyhydric alcohols, epoxy functional acrylic resins or any combinations thereof.

Suitable aromatic epoxy-based binders include epoxy and modified epoxy binders selected from bisphenol type epoxy-based binders such as the diglycidyl ethers of bisphenol A, bisphenol F and bisphenol S, resorcinol diglycidyl ether (RDGE), novolac type epoxy-based binders such as epoxy phenol novolac resins, epoxy cresol novolac resins and bisphenol A epoxy novolac resins, glycidyl ethers of dihydroxynaphtalenes or any combinations thereof.

In one preferred embodiment the one or more epoxy-based binder is an aromatic epoxy-based binder. Preferably the aromatic epoxy-based binder is derived from a combination of a compound comprising a least one epoxide functionality with an aromatic co-reactant comprising at least two hydroxyl groups.

Preferred epoxy binders are bisphenol epoxy binders. Preferred epoxy-based binders are bisphenol A and bisphenol F epoxy-based binders or bisphenol A/F epoxy binders. In one particularly preferred embodiment the epoxy-based binder is a bisphenol A epoxy-based binder.

The one or more epoxy-based binder may comprise a modified epoxy-based binder. Preferably the epoxy-based binder may be modified with fatty acids, acrylic acids, acrylic polymers, polypropylene oxide, polyethylene oxide, alcohols, carboxylic acids or acid anhydrides, or a combination thereof.

In neat form, i.e., before the epoxy-based binder is dissolved or dispersed in any solvent, and at ambient temperature (18 - 25 °C), the one or more epoxy-based binder is in a semi-solid or solid form, or a mixture thereof.

The epoxy equivalent weight (EEW) of the neat epoxy-based binder is preferably 250 - 1500 g/eq, more preferably 350 - 1000 g/eq, even more preferred 400 - 800 g/eq and most preferred 425 - 600 g/eq.

In one embodiment the composition may further comprise an additional epoxy-based binder having an EEW in neat form of 160 - 250 g/eq. If such binder is present, it is present in a lower amount than the semi-solid or solid epoxy based binder.

The one or more epoxy-based binder may also be dispersed or emulsified in water. Appropriate chemical modifications may be performed on the binder, i.e. to improve water compatibility or to increase flexibility. The water-based dispersions or emulsions comprising the epoxy-based binder may comprise other components such as emulsifiers, (reactive)diluents, organic solvents stabilizers, defoamers, dispersing agents and biocides.

When dispersed or emulsified in water, the one or more epoxy-based binders are in the form of particles or droplets. These particles or droplets may be considered the dispersed phase and the solvent (i.e. aqueous solvent) may be considered the continuous phase. It will be understood that an aqueous solvent is one comprising (preferably consisting of) mainly water.

The water-based dispersions or emulsions comprising the epoxy-based binder preferably have a solid content of 20 - 65 wt.%, more preferably 40 - 65 wt.%, most preferred 45 - 65 wt.%.

The solvent (preferably comprising water in the amounts as defined above) forms 35 to 80 wt% of the dispersions or emulsions, relative to the total weight of the dispersions or emulsions as a whole. Typical wt% ranges may be 35 to 60 wt%, such as 35 to 55 wt%, relative to the total weight of the emulsion as a whole.

The epoxy-based binder particles or droplets will typically have an average diameter of 4 to 2000 nm, preferably 25 to 1500 nm, more preferably 50 to 1000 nm, such as 100 to 900 nm. The "diameter" referred to in this context is the Z-average size, which will be understood to be the intensity weighted mean size as determined by ISO 22412:2017 using a Malvern Zetasizer Nano S instrument.

The dispersion or emulsion may be prepared by any suitable known method in the art.

The dispersion or emulsion may comprise emulsifying agents. The emulsifying agent may be non-ionic, anionic, cationic or amphoteric, preferably non-ionic.

Examples of non-ionic emulsifiers are alkyl phenoxy ethers, polyalkylene glycols, polysorbates, alkoxylated polysorbates, polyvinyl alcohols, polyvinyl esters, and polyether siloxanes. Examples of preferred non-ionic emulsifying agents may be polyalkylene glycols such as polyoxyethylene-polyoxypropylene co-polymers.

Examples of anionic emulsifying agents are alkyl-, aryl-, alkaryl- sulphates, other than sulphonates, phosphates, sulphosuccinates, sulphosuccinamates, sulphoacetates, acid anhydrides, carboxylic acids and amino acid derivatives.

Typical anionic emulsifying agents may be alkylbenzenesulfonate salts, alkyl ether sulfate salts, polyoxyethylene alkyl ether sulfate salts, polyoxyethylene alkylphenyl ether sulfate salts, alkylnaphthylsulfonate salts, unsaturated aliphatic sulfonate salts, and hydroxylated aliphatic sulfonate salts. The alkyl group referenced here can be exemplified by medium and higher alkyl groups such as decyl, undecyl, dodecyl, tridecyl, tetradecyl, cetyl, stearyl, and so forth. The unsaturated aliphatic group can be exemplified by oleyl, nonenyl, and octynyl. The counterion can be exemplified by sodium ion, potassium ion, lithium ion, and ammonium ion, with the sodium ion being typically used among these.

Typical cationic emulsifying agents can be exemplified by quaternary ammonium salt-type surfactants such as alkyltrimethylammonium salts, e.g., octadecyltrimethylammonium chloride and hexadecyltrimethylammonium chloride, and dialkyldimethylammonium salts, e.g., dioctadecyldimethylammonium chloride, dihexadecyldimethylammonium chloride and didecyldimethylammonium chloride.

The amphoteric surfactant can be exemplified by alkylbetaines and alkylimidazolines.

It is particularly preferred that the emulsifying agent is a non-ionic type.

The dispersions or emulsions may also comprise curing catalysts, antifoaming agents, preservatives, pH adjusting agents and buffers.

Examples of suitable commercially available epoxy-based binders are:
- Bisphenol A type epoxy-based binders: D.E.R. 331 from Olin, D.E.R. 332 from Olin, D.E.R 337 from Olin, D.E.R. 669E from Olin, EPON Resin 1001F from Hexion, Araldite GY 776 from Huntsman Advanced Materials,
- Bisphenol F epoxy-based binders: Epikote 862 from Hexion, or D.E.R. 354 from Olin.
- Mixture of bisphenol A and bisphenol F: D.E.R. 352 from Olin, or Epikote 235 from Hexion.
- Solid type-1 epoxy resin dispersion in water e.g. Beckopox EP 2375w/60WA or Beckopox EP 2384w/57WA from Allnex, NPEW-261W55 or NPEW-292DW53 from NanYa, BE3570W55 from Chang Chun Plastics, EPI-REZ 3523-WH-53 or EPI-REZ 6520-W-53, EPI-REZ Resin 6521-WH-56 or EPI-REZ 7520-WD-52 from Hexion

The one or more epoxy-based binder forms 15 to 70 wt% of the total weight of component A, preferably 20 to 65 wt%, more preferably 25 to 60 wt%, for example 25 to 50 wt%. It is within the ambit of the invention for these to be a single epoxy based binder, or a mixture of more than one epoxy based binder, such as two or three or more epoxy-based binders.

### Water

Component A comprises 20 to 60 wt% water, relative to the total weight of component A as a whole. Preferably, water is present in an amount of 25 to 55 wt%, more preferably 30 to 50 wt% relative to the total weight of component A.

The coating composition typically comprises 15 to 60 wt% water relative to the total weight of the coating compositions as a whole, preferably 20 to 50 wt%, such as 25 to 45 wt%. It will be appreciated that these wt% values includes water that is added to the paint during manufacture as well as water contained in the other raw materials used in the composition, such as water contained in the dispersed or emulsified epoxy-based binder. The total amount of water included in the composition will to a large degree depend on the types and amounts of other raw materials used.

### Amine based curing agent

Component B of the coating compositions of the invention comprises at least one curing agent. The curing agent is an amine based curing agent comprising a cyclic structure, meaning that it has a structure comprising at least one amine functional group and at least one cyclic group. The curing agent is ideally a polyamine or modified polyamine. Preferably the curing agent is not a polyamide, amidoamine or ketimine. Ideally, the curing agent is not modified in any way to increase its compatibility with water. That is, no surfactants are added to the curing agent, and no hydrophilic structural segments like polyoxyalkylene segments are present in the molecular structure of the curing agent in an amount that enables the curing agent to form a solution or a stable emulsion in water. Thus, the curing agent in itself is not a hydrophilic modified curing agent.

Ideally, the curing agent is not a water-soluble or water-dilutable curing agent, i.e. it is preferably not soluble in or compatible with a mixture of 50 wt% water and 50 wt% of the curing agent, more preferably it is not soluble or compatible in a mixture with 30 wt% water and 70 wt% curing agent, even more preferably it is not soluble or compatible with a mixture of 20 wt% water and 80 wt% curing agent. Examples of incompatibility with water may be phase separation, crystallization/precipitation and formation of an unstable emulsion. Furthermore, it is preferable if the curing agent is not an aqueous solution or suspension.

Preferably, the curing agent is a polyamine comprising at least two amino groups. To obtain a crosslinked network the curing agent ideally contains at least three "reactive" hydrogen atoms. "Reactive" hydrogen atom refers to the hydrogen atom that is transferred from the nucleophile to the oxygen atom of the epoxide during the ring opening reaction. Curing active amine groups cannot therefore be tertiary. Tertiary amine containing compounds may however be added to the composition as curing accelerators. The curing agent typically contains at least two curing reactive functional groups.

In one particularly preferred embodiment, the amine based curing agent comprises a benzylamine motif, which has the structure shown below:

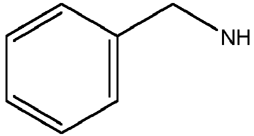

The benzylamine motif in the curing agent may be optionally substituted either on the ring, the methylene linker or the N atom although one active hydrogen must remain. Suitable substituents include C1-15 alkyl groups, OH, O-C1-4-alkyl, halogen, cyano, amine and alkyl amine groups (C1-4-N).

In one preferred embodiment the curing agent comprising the benzylamine motif is a Mannich reaction product of a phenol an aldehyde and a primary diamine. These reaction products and curing agents derived from them are often termed Mannich bases. The phenol may be unsubstituted or substituted. Substituents may include C1-15 alkyl or alkenylene groups, O-C1-C4 alkyl, halogen, cyano and alkyl amine groups. Preferably the phenol is unsubstituted or comprise a C15 alkyl chain. Phenols with a C15 alkyl side chain of varying degree of unsaturation (saturated, mono-unsaturated, di-unsaturated, and tri-unsaturated) are obtained from cashew nut shell liquid and are called cardanol, Mannich reaction products of cardanol are called phenalkamines. The aldehyde is preferably formaldehyde. Non-limiting examples of primary diamine may be polyethylene amines such as ethylenediamine (EDA), diethylenetriamine (DETA), triethylenetetramine (TETA), tetraethylenepentamine (TEPA) or higher ethyleneamines. Alternatively, the primary diamine may be cycloaliphatic amines such as isophoronediamine, 1,3-bis(aminomethyl)cyclohexane, 1,4-bis(aminomethyl)cyclohexane, norbornanediamine or arylalkyl amines like 1,2-bis(aminomethyl)benzene 1,3-bis(aminomethyl)benzene (MXDA) and 1,4-bis(aminomethyl)benzene. Preferably the amine is 1,3-bis(aminomethyl)benzene (MXDA).

In another embodiment the curing agent comprising the benzylamine motif is a reaction product of an arylalkyl amine and styrene. Suitable amines are 1,2-bis(aminomethyl)benzene, 1,3-bis(aminomethyl)benzene (MXDA), and 1,4-bis(aminomethyl)benzene. The amine is preferably 1,3-bis(aminomethyl)benzene (MXDA).

In another preferred embodiment, the curing agent is a polyamine curing agent comprising one or more benzylamine structures. More specifically, in this embodiment, the curing agent preferably comprises two or more repeating units, i.e. the curing agent is polymeric or oligomeric. Preferably the curing agent is a polyamine polymer that comprises a benzylamine structure on at least one end of the polyamine polymer chain. The polyamine polymer may comprise benzyl amine structures at both ends of the polymer chain. Each repeating unit may also comprise a benzylamine group. The benzylamine group may be substituted or unsubstituted.

In one preferred embodiment, the curing agent comprises at least two or more benzylamine structures.

In one particularly preferred embodiment the curing agent comprises a benzylated polyalkylene polyamine structure as described in WO2017/147138 A1. The benzylated polyalkylene polyamine structure preferably has a structure as shown below. 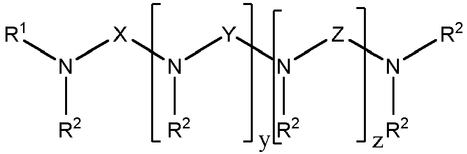
wherein R1 is substituted or unsubstituted benzyl
R2 is independently selected from R1 or a hydrogen atom or a group selected from C1 - C16 linear, cyclic or branched alkyl, alkenyl and alkylaryl groups
X, Y and Z are independently selected from C2 - C10 alkylene and cycloalkylene groups, preferably ethylene, propylene, butylene, hexylene, cyclohexyldimethylene and cyclohexalene.
y is and integer from 1 - 7
z is an integer from 0-4

Examples of suitable benzylated polyalkylene polyamine structures are benzylated polyethylene polyamines, benzylated polypropylene polyamines, benzylated polyethylene-polypropylene polyamines, and combinations thereof.

Non-limiting examples of polyethylene polyamines include ethylenediamine (EDA), diethylenetriamine (DETA), triethylenetetramine (TETA), tetraethylenepentamine (TEPA), pentaethylenehexamine (PEHA), and other higher polyethylene polyamines. Suitable polypropylene polyamines include, but are not limited to, propylene diamine (PDA), dipropylenetriamine (DPTA), tripropylenetetramine, and other higher polypropylene polyamines. Other polyalkylene polyamines include N-3-aminopropyl ethylenediamine, N,N'-bis(3-aminopropyl) ethylenediamine, and N,N,N'-tris(3-aminopropyl) ethylenediamine, N-3-aminopropyl diethylenetriamine; N-3-aminopropyl-[N'-3-[N-3 aminopropyl]aminopropyl]diethylenetriamine; N,N'-bis(3-aminopropyl)diethylenetriamine; N,N-bis(3-aminopropyl)diethylenetriamine; N,N,N'-tris(3-aminopropyl)diethylenetriamine; N,N',N"-tris(3-aminopropyl)diethylenetriamine; N,N,N',N'-tetrakis(3-aminopropyl)diethylenetriamine; N,N-bis(3-aminopropyl)-[N'-3-[N-3-aminopropyl]aminopropyl]-[N'-3-aminopropyl]diethylenetriamine; and N-3-aminopropyl-[N'-3-[N-3-aminopropyl]aminopropyl]-[N'-3-aminopropyl]diethylenetriamine.

The benzylated polyalkylene polyamine structures are typically prepared by a reductive amination of benzaldehyde, including both substituted and unsubstituted benzaldehydes with a polyalkylene polyamine. Examples of substituted benzaldehydes are benzaldehydes where the aromatic ring is substituted with one or more halogen atoms, C1-C4 alkyl, methoxy, ethoxy, amino, hydroxyl or cyano groups. Preferred benzaldehydes are benzaldehyde and vanillin.

The benzylated polyalkylene polyamine structure may be further reacted with for example Mannich bases as described in WO2017147138 A1 or epoxy-functional compounds to make epoxy-adducts.

In another embodiment, the curing agent is an amine epoxy adduct, such as an adduct made by reacting a bisphenol type epoxy resin with primary diamines, preferably the epoxy resin is a bisphenol A type. Preferably the bisphenol A epoxy resin has an EEW of less than 250 g/eq. Suitable primary diamines for the synthesis of the amine epoxy adduct may be ethyleneamines such as ethylenediamine (EDA), diethylenetriamine (DETA), triethylenetetramine (TETA), tetraethylenepentamine (TEPA), pentaethylenehexamine (PEHA), and other higher polyethylene polyamines. Aliphatic primary diamines like 1,3-diaminopropane, 1,4-diaminobutane, 1,5-diaminopentane, 1,5-diamino-2-methylpentane, 1,6-hexanediamine may also be used. Primary diamines comprising a cyclic structure, such as, 1,4-diaminocyclohexane, isophoronediamine (IPDA), 1,3-bis(aminomethyl)cyclohexane, 1,4-bis(aminomethyl)cyclohexane, 1,3-bis(aminomethyl)benzene (MXDA) and 1,4-bis(aminomethyl)benzene may also be used. Preferably, the amine epoxy adduct curing agent comprises an amine with cyclic structure, and preferably has an average molecular weight of 500 g/mol to 3000 g/mol, more preferably 600 g/mol to 2000 g/mol.

The amine epoxy adduct is synthesized by letting the epoxy resin react with an excess of the primary diamines at 40 - 100 °C. The reaction may take place in a solvent like butanol or benzyl alcohol, preferably the solvent is benzyl alcohol.

The curing agent may be supplied as 100 wt% solids, or with reduced wt% solids together with a solvent, preferably a solvent that is compatible with waterborne paints, such as benzyl alcohol.

When accounting for components not contributing to cross-linking, like solvents, plasticisers and accelerators, the form of delivery or "as supplied" AHEW of the curing agent is obtained. The form of delivery or "as supplied" AHEW is commonly stated in the technical datasheet of commercially available curing agents. Thus, the amine-based curing agent preferably has a form of delivery AHEW of 40 to 300 g/eq, preferably 60 to 150 g/eq, most preferably the AHEW is 80 to 110 g/eq.

The viscosity of the amine-based curing agent may be up to 8000 mPas and is preferably below 1000 mPas, preferably 800 - 50 mPas, more preferably 700 - 60 mPas as measured according to ISO 2884-1:2006 at 23 °C.

The amine based curing agent is preferably present in an amount of 3 to 80 wt%, more preferably 4 to 60 wt%, even more preferably 4.5 to 55 wt%, such as 5 to 50 wt%, relative to the total weight of component B.

Suitable commercially available curing agents are Gaskamine 240 from Mitsubishi Gas Chemical Company Inc., Ancamine 1618, Ancamine 2422 and Ancamine 2432, Ancamine 2519, Ancamine 2738, Ancamine 2739, Ancamine 2712M all from Evonik, and phenalkamines like NX-5594, GX-5135, GX-6027, NC-540, NC-541, NC-541LV, LITE 2001, LITE 2001LV and Lite 2002 all from Cardolite.

### Silane

The composition further comprises at least one silane. The silane may be present in component B or in both component A and component B. It is required that the silane is at least present in component B.

Silanes may improve the flexibility and cohesion of the coating as well as its adhesion to substrates and anti-corrosive performance, and are efficient thinners in suitable systems.

Silanes of use in the invention include oligomers of silanes and may have Mw in the range of less than 1500 g/mol.

Suitable silanes are of general formula (I) or (II)

(I) Y-R_{(4-z)}SiX_{z}

wherein z is an integer from 1 to 3,

(II) Y-R_{(3-y)}R¹SiX_{y}

wherein y is an integer from 1 to 2,
and where for both formula (I) and (II),
   R is a hydrocarbylene group having 1 to 12 C atoms optionally containing an ether or amino linker,
   R¹ is a hydrocarbyl group having 1 to 12 C atoms;
   Y is a functional group bound to R that can react with the epoxy-based binder and/or the curing agent. Preferably Y is an isocyanate, epoxy, amino, hydroxy, carboxy, acrylate, or methacrylate group. The Y group can bind to any part of the chain R. It will be appreciated that where Y represents an epoxy group then R will possess at least two carbon atoms to allow formation of the epoxide ring system.

The at least one silane present in component B is preferably an amino functional silane, i.e. wherein Y is an amino group. The amino group(s) are preferably NH₂.

Each X independently represents a halogen group or an alkoxy group. It is especially preferred if X is an alkoxy group such as a C1-6 alkoxy group, especially methoxy or ethoxy group. It is also especially preferred if there are two or three alkoxy groups present. Thus, z is ideally 2 or 3, especially 3.

Subscript y is preferably 2.

R¹ is preferably C1-4 alkyl such as methyl. R is a hydrocarbon group having up to 12 carbon atoms.

By hydrocarbon is meant a group comprising C and H atoms only. It may comprise an alkylene chain or a combination of an alkylene chain and rings such as phenyl or cyclohexyl rings. The term "optionally containing an ether or amino linker" implies that the carbon chain can be interrupted by a -O- or -NH- group in the chain, e.g. to form a silane such as [3-(2,3-epoxypropoxy)propyl]trimethoxysilane: H₂COCHCH₂OCH₂CH₂CH₂Si(OCH₃)₃. It is preferred if the group Y does not bind to a carbon atom which is bound to such a linker -O- or -NH-.
R is preferably an unsubstituted (other than Y obviously), unbranched alkyl chain having 2 to 8 C atoms.

A preferred silane general formula is therefore of structure (III)

(III) Y'-R'(_{4-z'})SiX'_{z'}

wherein z' is an integer from 2 to 3, R' is an unsubstituted, unbranched alkyl chain having 2 to 8 C atoms optionally containing an ether or amino linker, Y' is an amino or epoxy functional group bound to the R' group, and X' represents an alkoxy group.

Examples of such silanes are the many representatives of the products manufactured by Evonik Industries AG and marketed under the brand name of Dynasylan(R), the Silquest(R) silanes manufactured by Momentive, and the GENIOSII,(R) silanes manufactured by Wacker.

Specific examples include methacryloxypropyltrimethoxysilane (Dynasylan MEMO, Silquest A-174NT), 3-mercaptopropyltri(m)ethoxysilane (Dynasylan MTMO or 3201; Silquest A-189), 3-glycidoxypropyltrimethoxysilane (Dynasylan GLYMO, Silquest A-187), 3-glycidoxypropyltriethoxysilane (Dynasylan GLYEO), tris(3-trimethoxysilylpropyl) isocyanurate (Silquest Y- 11597), beta-(3,4-epoxycyclohexyl)ethyltrimethoxysilane (Silquest A-186), gamma-isocyanatopropyltrimethoxysilane (Silquest A-Link 35, Geniosil GF40), (methacryloxymethyl)trimethoxysilane (Geniosil XL 33), (isocyanatomethyl)trimethoxysilane (Geniosil XL 43), 3-aminopropyltrimethoxysilane (Dynasylan AMMO; Silquest A-1110), 3-aminopropyltriethoxysilane (Dynasylan AMEO, Silquest A-1100) or N-(2-aminoethyl)-3-aminopropyltrimethoxysilane (Dynasylan DAMO, Silquest A-1120) or N-(2-aminoethyl)-3-aminopropyltriethoxysilane, 3-[2-(2-aminoethylamino)ethylamino]propyltrimethoxysilane (Silquest A-1130), bis[3-(trimethoxysilyl)propyl]amine (Silquest A-1170), N-ethyl-3-trimethoxysilyl-2-methylpropanamine (Silquest A-Link 15), N-phenyl-3-aminopropyltrimethoxysilane (Silquest Y-9669), 4-amino-3,3- dimethylbutyltrimethoxysilane (Silquest Y-11637), (N-cyclohexylaminomethyl)triethoxysilane (Geniosil XL 926), (N-phenylaminomethyl)trimethoxysilane (Geniosil XL 973), Deolink Epoxy TE and Deolink Amino TE (D.O.G Deutsche Oelfabrik) and mixtures thereof. The oligomeric epoxysilane, Coatosil MP 200 from Momentive may also be used in the composition.

Silanes suitable for formulating into component B include 3-aminopropyltriethoxysilane, 3-aminopropyltrimethoxysilane, N-(2-aminoethyl)-3-aminopropyltrimethoxysilane, N-(2-aminoethyl)-3-aminopropyltriethoxysilane, 3-aminopropylmethyldiethoxysilane, N-(2-aminoethyl)-3-aminopropylmethyldimethoxysilane , and 3-mercaptopropyltri(m)ethoxysilane.

The use of silanes 3-aminopropyltrimethoxysilane and/or 3-aminopropyltriethoxysilane is especially preferred. A mixture of silanes might also be used.

The amount of silane present in component B may be 2 to 30 wt%, preferably 3 to 20 wt.%, relative to the total weight of component B.

Component A may also optionally comprise a silane. In this embodiment, the silane present in component A is different to the silane present in component B.

The silane in component A may be reactive towards the amine functionality of the curing agent in component B, such as epoxy functional silanes and (meth)acrylic functional silanes. Preferably, the silane present in component A is an epoxy functional silane, i.e. wherein, in Formulas (I) or (II) above, Y is an epoxy group. The use of 3-glycidoxypropyltriethoxysilane (H₂COCHCH₂OCH₂ CH₂CH₂Si(OCH₂CH₃)₃ and/or 3-glycidoxypropyltrimtethoxysilane (H₂COCHCH₂OCH₂CH₂CH₂ Si(OCH₃)₃), or the oligomeric epoxysilane Coatosil MP 200 is especially preferred.

The amount of silane(s) present in the coating composition as a whole may be 0.1 to 20 wt%, preferably 0.25 to 10 wt.%, more preferably 0.5 to 5.0 wt%, relative to the total weight of the coating composition as a whole.

### Reactive diluents

The coating composition may further comprise a reactive diluent. The reactive diluent may be any reactive compound that will contribute to reduced viscosity of the coating composition or one of its constituents, i.e a binder or a resin. The reactive diluent is typically added to component A and may be an acrylic ester compound or an epoxy compound. Acrylic esters may be added with the purpose of both acting as a diluent and as a curing accelerator.

Examples of suitable acrylic esters are 1,6-hexanediol diacrylate, trimethylolpropane triacrylate, pentaerythritol tetraacrylate and mixtures thereof.

Examples of suitable epoxy functional reactive diluents include phenyl glycidyl ether, alkyl glycidyl ether (number of carbon atoms in alkyl group: 1 to 16), glycidyl ester of neodecanoic acid (R1 R2 R3C-COO-Gly, where R1 R2 R3 are alkyl groups such as C8 to C10 alkyl and Gly is a glycidyl group), olefin epoxide (CH3-(CH2)n-Gly, wherein n=11 to 13, Gly: glycidyl group), 1,4-butanediol diglycidyl ether (Gly-O-(CH2)4-O-Gly), 1,6-hexanediol diglycidyl ether (Gly-O-(CH2)6-O-Gly), neopentyl glycol diglycidyl ether (Gly-O-CH2-C(CH3)2-CH2-O-Gly), trimethylolpropane triglycidyl ether (CH3-CH2-C(CH2-O-Gly)3), and C1-20-alkylphenyl glycidyl ether (preferably C1-5 alkylphenylglycidyl ether), e.g., methylphenyl glycidyl ether, ethylphenyl glycidyl ether, propylphenyl glycidyl ether and para tertiary butyl phenyl glycidyl ether (p-TBPGE), reaction products of epichlorohydrin and an oil obtained from the shells of cashew nuts.

In one embodiment the reactive diluent is reaction products of epichlorohydrin and cardanol, like for example Cardolite NC-513 from Cardolite.

In another particularly preferred embodiment the reactive diluents are aliphatic reactive diluents. The aliphatic reactive diluents are preferably formed from the reaction of a compound comprising at least one aliphatic epoxide functionality with an aliphatic alcohol, such as dodecyl and tetradecyl glycidyl ethers, or an aliphatic polyol such as 1,6-hexanediol diglycidyl ether or 1,4-butanediol diglycidyl ether. Aliphatic glycidyl ethers of chain length 8 to 14 are preferred. Aliphatic reactive diluents may contribute to the flexibility of the coating film.

The above reactive diluents can be used singly or in combination of two or more diluents.

The reactive diluent is preferably present in an amount of 0.1 to 30 wt% preferably 0.2 to 20 wt%, more preferred 0.5 to 10 wt% of the coating composition.

By adding the reactive diluent in the above amount, the viscosity of the coating composition and/or some of its constituents may be reduced and film formation properties may be improved.

Preferably the viscosity of the reactive diluent is <100 cp, preferably <50 cP, preferably <30 cP, most preferably viscosity <20 cP.

The epoxy equivalent weight (EEW) of the reactive diluents is preferably 50 - 500 g/eq, more preferred 100 - 400 g/eq, most preferred 100 - 300 g/eq.

The reactive diluent is preferably present in Component A.

### Accelerators

The coating composition may further comprise a curing accelerator. A curing accelerator will increase the curing rate of the composition and is an optional feature. For amine cured epoxy compositions like the one of the present invention, phenolic compounds, salts of strong acids, tertiary amine compounds, and acrylic esters as described in the section on reactive diluents may be employed as accelerators.

Phenolic compounds that may be suitable accelerators are compounds such as phenols, bisphenols, alkyl phenols including cardanol, and benzoic acid derivatives such as salicylic acid. Salts of strong acids that may be suitable as accelerators include triflate salts of the metals in group 2 of the periodic table such as Mg and Ca. Tertiary amine compounds suitable as accelerators are 3-aminopropyldimethylamine, benzyldimethylamine, 1,4-diazabicyclo[2.2.2]octane, 1,8-diazabicyclo[5.4.0]undec-7-ene, dimethylethanolamine, diethylethanolamine, triethanolamine, and 2,4,6-tris(dimethylaminomethyl)phenol (Ancamine K54 from Evonik).

Phenolic accelerators may be present in component A or component B, while the tertiary amine based accelerators may be present in component B of the coating composition.

The accelerator is typically added in an amount of 0.1-5wt% based on the total composition, such as 0.2-2.5wt%.

### Hydrocarbon resin

The coating composition of the invention optionally comprises a hydrocarbon resin. A wide range of hydrocarbon resins are suitable for including in the coating composition. Preferably the hydrocarbon resin is a petroleum resin.

Examples of petroleum resins suitable in the present invention include an aromatic petroleum resin obtained by polymerizing a C9 fraction (e.g. styrene derivatives such as alpha methylstyrene, o, m, p-cresol, indene, methyl indene, cumene, naphthalene or vinyltoluene) obtained from a heavy oil that is produced as a by-product by naphtha cracking, an aliphatic petroleum resin obtained by polymerizing a C5 fraction such as 1,3-pentadiene or isoprene, 2-methyl-2-butene, cyclopentadiene, dicyclopentadiene or cyclopentene. Also employable in the invention are a copolymer-based petroleum resin obtained by copolymerizing the C9 fraction and the C5 fraction, an aliphatic petroleum resin wherein a part of a conjugated diene of the C5 fraction such as cyclopentadiene or 1,3-pentadiene is cyclic-polymerized, a resin obtained by hydrogenating the aromatic petroleum resin, and an alicyclic petroleum resin obtained by polymerizing dicyclopentadiene. Mixtures of diaryl and triaryl compounds obtained from reaction of C9 blends under catalytic conditions are also possible to utilize.

Other examples of hydrocarbon resins are indene-coumarone resins, and xylene-formaldehyde resins.

Preferably, the hydrocarbon resin does not contain any OH-functionality and has a viscosity of 50 - 10000 mPas.

The coating composition of the present invention preferably comprises 0-15 wt%, hydrocarbon resin, such as 1-7 wt%, based on the total weight of the composition.

The hydrocarbon resin may be present either in component A or in component B of the coating composition, usually it is present in component B of the coating composition

Examples of suitable commercially available hydrocarbon resins may be Novares TL 10, Novares L 100, Novares L 100 W from Rütgers, and Epodil LV5 from Evonik.

### Other binders

The coating composition of the present invention might optionally comprise other binders than the epoxy binders, amine based curing agents, and the hydrocarbon resins described above to adjust the properties of the coating composition, such as mechanical properties, UV-stability, intercoat adhesion and film formation properties. Such binders might be thermoplastic binders that forms films by physical drying, and some of the resins might also cross-link by reaction with oxygen and/or moisture from the atmosphere.

Such binders might comprise of acrylic (co)polymers, vinylic (co)polymers, polyester binders, including alkyds and alkyd modified epoxy resins e.g. epoxy esters, and polysiloxanes. It is appreciated that such resins also might optionally comprise of reactive groups that are capable of reacting with either the epoxy groups found in the epoxy binders or the amine groups found in the amine based curing agents described in the sections above.

The thermoplastic binders might be dissolved in an organic solvent or might be suspended in an aqueous medium in the form of an emulsion or a dispersion.

Non limiting examples of suitable commercially available resins may be Elvax 40W from Dow, Laroflex MP 15, Laroflex MP 25, Laroflex MP 35, Laroflex MP 45 and Laroflex MP 60 from BASF, DAOTAN^{®} STW 6434/40WA from Allnex, Eposil 5500, VeoVa 9, VeoVa 10 and VeoVa EH from Hexion, PC-Mull GR 100, EPS 545 and EPS 541, EPS 2458, EPS 2512, EPS 2615, EPS 4216, EPS 4402, EPS 6264, from EPS, Tego Phobe 1401, Tego Phobe 1409, Tego Phobe 1500N, Tego Phobe 1659, Tego Phobe 6010, Tego Phobe 6510, Tego Phobe 6600 and Sivo 214 from Evonik

### Hollow spherical filler particles

The coating composition of the present invention may comprise hollow spherical filler particles. The filler particles may be inorganic such as ceramic, metal oxide or glass, or organic such as polymeric spheres based on e.g. poly(meth)acrylate, polyvinyl or polyvinylidene. Suitable hollow, spherical, filler particles are commercially available. Examples of commercially available inorganic, spherical filler particles include Glass Bubbles S28HS, Glass Bubbles S38HS, Fillite Cenosphere, Poraver (expanded glass), Eccospheres, Q-Cel, Sphericel, Omega Shperes, (availale from e.g. 3M, Omya, Poraver, Trelleborg, Potters, Omega, SMC minerals) and hollow glass spheres from Hollowlite. Examples of commercially available organic spherical filler particles are the Dualite^{®} grades E030, E055, E065-135D, E130-055D, E130-095D, E130-105D, E130-040D, E035-FR and E135-025D all from Chase Corporation.

The hollow, spherical particles are an optional component of the coating composition. The hollow filler particles will aid in increasing the volume% solids of the formulation when used in place of conventional mineral based fillers (described in the next section).

The spherical, filler particles are hollow. This means the particles have a void or cavity in their centres. This void or empty space is filled with gas, preferably air. Preferred spherical, filler particles for use in the present invention are substantially hollow. Thus, preferably the volume of the void or cavity is at least 70 vol% and more preferably at least 80 vol% of the total volume of the particles. Preferably the hollow, spherical, filler particles have as low a density as practicable, e.g. the density of the hollow, spherical, filler particles might be 0.1-1 g/cm³, more preferably 0.2-0.8 g/cm³, and still more preferably 0.2-0.4 g/cm³, e.g. as specified on the technical specification provided by suppliers. This reflects the fact that the particles are hollow rather than solid. Lower density particles are advantageous because they will contribute positively to the volume percentage of solids at a much lower weight percentage loading than conventional mineral based fillers.

Preferably the hollow, spherical, filler particles present in the coating compositions of the present invention have a crush strength of at least 3000 psi (90% survival by volume), as specified by the supplier in the technical datasheet (Nitrogen Isostatic Crush Strength test). This is beneficial as it means that the filler particles are not crushed during application and processing and thus maintain their ability to provide a low density coating composition. It is also advantageous that the filler particles do not change shape and/or size during processing, so they can pack tightly and achieve a high build in the final coatings formed.

The hollow, spherical, filler particles present in the coating compositions of the present invention are preferably inorganic and comprise and more preferably consist of glass, ceramic or metal oxide. More preferably the hollow, inorganic, spherical, filler particles present in the coating compositions of the present invention comprise and still more preferably consist of glass. This is because glass particles provide a good balance of crush strength, hardness and density. Optionally the hollow, inorganic, spherical, filler particles present in the coating compositions of the present invention may be surface treated. Some examples of surface treatment include treatment to alter the hydrophobicity of the surface, to improve compatibility with the binder and/or to facilitate chemical incorporation into the binder.

The hollow, inorganic, filler particles present in the coating compositions of the invention are substantially spherical and more preferably spherical. This is advantageous as it allows the filler particles to pack more closely together in the coating compositions of the invention. Preferably the hollow, inorganic, filler particles have a mean diameter (d50) of 1 to 100 µm, more preferably 1 to 80 µm and still more preferably 10 to 50 µm, as determined by ISO 13320:2009 using a Malvern Mastersizer 2000. These particle sizes are preferred to ensure that the coating has adequate visual appearance, anticorrosive properties at low dry film thickness, and viscosity.

Preferred coating compositions of the present invention comprise 1.0 to 10 wt%, more preferably 1.5 to 7.5 wt% and still more preferably 2.0 to 5.0 wt% hollow, inorganic, spherical, filler particles, based on the total weight of the composition. The hollow, inorganic, spherical filler particles are generally present in component B of the coating composition.

### Fillers and pigments

The coating composition optionally comprises fillers and colour pigments.

The fillers comprise organic and inorganic fillers, the inorganic fillers may be naturally occurring, i.e. mined or of synthetic origin i.e. precipitated, and may or may not be surface treated.

Suitable types of inorganic fillers may be selected from the following groups of minerals; silicates, phyllosilicates, silicas, carbonates, barytes, metal oxides, metals, phosphates, halides, sulfides and sulfates. Organic fillers may comprise organic polymers or polymer blends, graphite, graphene, graphene oxide, fullerenes, carbon nanotubes, carbon fibers as well as organic polymer particles, e.g. core-shell particles containing an organic compound(s) such as a dye, resin and/or an organic liquid.

Non-limiting examples of fillers that can be used in the coating composition according to the present invention are nepheline syenite, talcum, plastorite, chlorites, chrysolite, mica, pyrophyllite, feldspars, bentones, kaolins, mica/muscovite, clays, wollastonite, quartz, christobalite, glass flakes, glass fibers, fumed silica, calcium silicate, pumice, diatomaceous earth, calcium carbonate, magnesium carbonate, calcium sulfate, dolomite, barium sulfate, iron oxide, micaceous iron oxide, zinc oxide, aluminium oxide, aluminium hydroxide, aluminium flakes, zinc flakes, and solid silicone resins, which are generally condensed branched polysiloxanes. Some fillers such as fumed silica and clays may have a thickening effect on the coating composition. Inorganic core-shell particles containing an organic compound(s) such as a dye, resin and/or an organic liquid may also be used.

An example of a preferred filler is wollastonite. The wollastonite may or may not be surface treated. Examples of commercially available wollastonite fillers are Nyad^{®} M1250, Nyad^{®} M325, Nyad^{®} M400, Nyad^{®} 325, Nyad^{®} 400, Nyad^{®} MG, 10 AS Wollastocoat^{®}, 10 ES Wollastocoat^{®}, M400 Wollastocoat^{®}, M9000 Wollastocoat^{®} from Imerys, and Tremin^{®} 283, Tremin^{®} 939 from Quartzwerke group.

The pigment(s) may be inorganic pigments, organic pigments or a mixture thereof. The pigments may be surface treated.

Representative examples of pigments include black iron oxide, red iron oxide, yellow iron oxide, titanium dioxide, zinc oxide, carbon black, graphite, red molybdate, yellow molybdate, zinc sulfide, antimony oxide, sodium aluminium sulfosilicates, quinacridones, phthalocyanine blue, phthalocyanine green, indanthrone blue, cobalt aluminium oxide, carbazoledioxazine, isoindoline orange, bis-acetoaceto-tolidiole, benzimidazolone, quinaphthalone yellow, isoindoline yellow, tetrachloroisoindolinone, and quinophthalone yellow, metallic flake materials (e.g. aluminium flakes). Preferred pigments are black iron oxide, red iron oxide, yellow iron oxide and titanium dioxide. In one preferred embodiment the titanium dioxide is surface treaded with a silicone compound, a zirconium compound, an aluminium compound or a zinc compound.

Pigments and fillers may be added to the paint composition in the form of a powder or as a slurry or concentrate.

The amount of the at least one filler or pigment, including anticorrosive pigments, is preferably in the range 0.05 to 50wt%, preferably in the range 1 to 45 wt% more preferably 5 to 40 wt% and still more preferably 10 to 35wt%, based on the total weight of the coating composition.

### Anticorrosive pigments

Anticorrosive pigments and/or additives may be included in the coating composition to improve its anticorrosive performance. The types of anticorrosive pigments and additives are not specifically limited and any suitable anticorrosive pigments and additives may be used. The anti-corrosive pigments may be based on borates, borosilicates, phosphates, orthophosphates, polyphosphates, phosphosilicates, silicates combined with a metal or metal cation such as zinc, aluminium, molybdenium, calcium, strontium, aluminium magnesium, and barium. The anti-corrosive pigments may be modified, e.g. surface modified, and/or contain complex ions and chelates.

Non-limiting examples of suitable anti-corrosive additives may be imidazoles (in pure form or contained in a polymer or resin matrix) polymers and other organic substances such as C12-14-(tert)-alkylamines, (2-benzothiazolylthio)-butanedioic acid, 4-oxo-4-p-tolylbutyric acid, adduct with 4-ethylmorpholine, (2-benzothiazolylthio) butanedioic acid, poly(3-ammoniumpropylethoxysiloxane)dodecanoate, ammonium benzoate, and morpholine.

Examples of suitable commercially available anticorrosive pigments and additives may be: Halox 520, Halox 570, Halox 630, Halox 350, Halox 430, Halox 700, Halox BW-11. Halox BW-191, Halox CW-314, Halox CW-491, Halox CZ-170, Halox SW-111, Halox SZP-391, Halox SZP-395, Halox Z-Plex 111, Haloz Z-Plex 250 and Halox Z-Plex 750 from Halox, Habicor CS, Habicor Si, Habicor ZS, Habicor ZA, Habicor ZN, Habicor ZO, Habicor ZM, Habicor AZ, Habicor SP, Habicor CP4295, Habicor Habicor ZP3850, Habicor ZP3860, Habicor 1000 and Habicor 1001 from Habicor and AX1 from Hexigone.

The coating composition may comprise of 0 to 15 wt%, e.g. 0.1 - 10 wt% of anticorrosive pigments/additives The coating composition preferably comprises zinc phosphate and/or calcium phosphate at a loading of between 0.5 and 10 wt%

### Additives

The coating composition of the present invention optionally comprises one or more additives. Examples of additives that may be present in the coating composition of the invention include, rheology modifiers such as thixotropic agents, thickening agents and anti-settling agents, dispersing agents, wetting agents, coalescing additives, surfactants, surface active additives such as surface tension reduction additives, defoamers, plasticizers, flash rust inhibitors, in can corrosion inhibitors and biocides. Suitable additives are not necessarily limited to additives developed and sold for use in paint. Additives developed and sold for use in for instance adhesives, building materials, plastics/resins, drilling fluids, paper coatings and pigment concentrates may be used if compatible with the coating composition. As the efficiency of any additive used in waterborne coating compositions may, to a great extent, be influenced by the other raw materials and additives contained therein, it is important that suitable types and concentrations of additives are determined by testing. In many cases it may be necessary and/or useful to add several different additives of any given type, i.e. two or more defoamers or two or more rheology modifiers, to achieve the desired properties/efficiency.

Defoamers and air release additives, hereby just referred to as defoamers, are commonly used in waterborne paints due to its comparably higher concentration of surfactants and high surface tension relative to solvent borne and solvent free paints. The type of defoamer is not specifically limited and any suitable type can be used. Common defoamers can be divided into mineral oil defoamers, silicon defoamers and polymer defoamers. Commercially available defoamers often contain a mixture of these types, often in combination with solvents and solid particles. Non-limiting examples of defoamers that can be used may be Byk-011, Byk-012, Byk-014, Byk-015, Byk-016, byk-017, Byk-018, Byk-019, Byk-021, Byk-022, Byk-023, Byk-024, Byk-025, Byk-028, Byk-035, Byk-037, Byk-038, Byk-039, Byk-044, Byk-051N, Byk-052N, Byk-053N, Byk-054, Byk-055, Byk-057, Byk-070, Byk-072, Byk-077, Byk-081, Byk-085, Byk-088, Byk-092, Byk-093, Byk-094, Byk-141, Byk-1610, Byk-1611, Byk-1615, Byk-1616, Byk-1617, Byk-1630, Byk-1640, Byk-1650, Byk-1707, Byk-1709, Byk-1710, Byk-1711, Byk-1719, Byk-1723, Byk-1724, Byk-1730, Byk-1740, Byk-1751, Byk-1752, Byk-1758, Byk-1759, Byk-1760, Byk-1770, Byk-1780, Byk-1781, Byk-1785, Byk-1786, Byk-1788, Byk-1789, Byk-1790, Byk-1791, Byk-1794, Byk-1795, Byk-1796, Byk-1797, Byk-1799, Byk-A 515, Byk-A 525, Byk-530, Byk-535, Byk-A 550, Byk-A 555 and Byk-A 560 from BYK, Tego Airex 901 W, Tego Airex 901 W N, Tego Airex 902 W, Tego Airex 902 W N, Tego Airex 904 W, Tego Airex 904 W N, Airase 4500, Airase 4655, Airase 5355, Airase 5655, Airase 8070, Surfonyl 104, Surfonyl 107L, Surfonyl 420, Tego foamex 3062, Tego Foamex 8050, Tego Foamex 843, Tego Foamex 844, Tego Foamex 845 Tego Foamex 883, Tego Foamex 1488, Tego Foamex 810, Tego Foamex 811, Tego Foamex 812, Tego Foamex815, Tego Foamex822, Tego Foamex 823 and Tego Foamex 825 from Evonik. Especially preferred defoamers is Byk-011 and Byk-022.

Flash rust and in-can rust preventative additives may be used to for instance prevent in-can rusting and the formation of flash-rust on metal substrates. The types of in-can rust preventatives and flash-rust inhibitors is not specifically limited and any suitable in-can rust preventatives and flash-rust inhibitors can be used. Common flash-rust inhibitors and in-can rust preventatives include borates such as sodium tetraborate, nitrites such as sodium nitrite, benzoates such as ammonium benzoate, benzotriazoles, phosphates such as dipotassium hydrogen orthophosphate, and alcohols such as 2-dimethylaminoethanol. Non-limiting examples of suitable commercially available products may be Halox Flash-X 150, Halox Flash-X 330, Lopon DK, Lopon DV from Halox.
Non-limiting examples of a preferred flash rust and in-can rust preventatives may be sodium nitrate and ammonium benzoate, or a combination thereof.

Biocides may be used to for instance prevent the in-can growth of bacteria and fungi. The type of biocide is not specifically limited and any suitable biocide can be used. Non-limiting examples of suitable in-can preservatives may be biocides based on one or several of methylchloroisothiazolinone (CIT), methylisothiazolinone (MIT) and benzisothiazolinone (BIT). Optionally, if the primer is to be applied without a topcoat, a film-biocide may be used, as coatings made from waterborne paints may be susceptible for fouling. A typical example of a film biocide may be based on benzimidazole carbamate, 2-octyl-2H-isothiazol-3-one or dichlorooctylisothiazolinone or other suitable molecules. Non-limiting examples of suitable commercially available biocides may be Acticide DW, Acticide OTP 10, Acticide OTA 20, Acticide EPW, Acticide OTW, Acticide DCA 10, Acticide MBS, Acticide HF, Acticide FI(N), Acticide FS(N), Acticide MBZ, Acticide M10, Acticide DBW. One preferred biocide is Acticide M 10.

Surface-active additives may be added to for instance adjust the surface tension of the coating composition either at the coating/substrate interface, coating/coating interface and/or the air/coating interface, mainly to prevent surface defects such as bad substrate wetting, cratering, floating and formation of Bénard cells, reduce dirt pickup, adjust surface slip and to improve leveling and intercoat adhesion in coating systems. The type of surface-active additive is not specifically limited and any suitable surface-active additive can be used. Many surface-active additives are based on silicone surfactants like polyether modified polysiloxanes, organic polymers like polyacrylates, low molecular organic surfactants and fluoro-surfactants. Non-limiting examples of suitable commercially available surface-active additives may be Byk-301, Byk-302, Byk-326, Byk-327, Byk-332, Byk-333, Byk-342, Byk-345, Byk-346, Byk-347, Byk-348, Byk-349, Byk-375, Byk-381, Byk-3400, Byk-3410, Byk-3420, Byk-3450, Byk-3451, Byk-3455, Byk-3456, Byk-3480, Byk-3481, Byk-3499, Byk-3560, Byk-3565, Byk-3566, Byk-3751, Byk-3752, Byk-3753, Byk-3754, Byk-3760, Byk-3764, Byk-9890, Byk-DYNWET 800, Byk-Silclean 3720, Byketol-AQ, Byketol-PC, Byketol-WA, NanoByk-3603, NanoByk-3620, NanoByk-3650, NanoByk-3652.

A rheology modifier may be employed to adjust the rheological profile of the paint as to prevent settling and floating issues, thus extending the shelf-life of the paint, as well as to adjust flow and to improve sag resistance, workability, application properties and the stabilization of pigment and extender particles. The type of rheological modifier is not specifically limited and any suitable rheological modifier can be used but should be chosen based on which properties need to be improved and based on compatibility with the rest of the formulation. Non-limiting examples of suitable rheological modifiers may be cellulosic thickeners, xanthan gum, guar gum, organically modified clays such as bentonite, hectorite and attapulgite clays, unmodified clays, organic wax thixotropes based on castor oil and castor oil derivatives, amide waxes, rheology modifiers based on an acrylic, urea, modified urea, polyurethane, amide or polyamide backbone, and fumed silica. The active constituents of the rheological modifier may be modified with functional groups such as for instance polyether and alcohol groups, which is especially true for many of the associative types of rheological modifiers, or surface treated with for instance silanes which is common with fumed silica. Non-limiting examples of commercially available rheology modifiers may be TS-610, TS-530, EH-5, H-5, and M-5 from Cabot and Aerosil^{®} R972, Aerosil^{®} R974, Aerosil^{®} R976, Aerosil^{®} R104, Aerosil^{®} 200, Aerosil^{®} 300, Aerosil^{®} R202, Aerosil^{®} R208, Aerosil^{®} R805, Aerosil^{®} R812, Aerosil^{®} 816, Aerosil^{®} R7200, Aerosil^{®} R8200, Aerosil^{®} R9200, Aerosil^{®} R711 from Evonik, Laponite SL 25, Claytone-3, Rheobyk-420, Rheobyk 425, Rheobyk-D 410, Rheobyk-D 420, Rheobyk-425, Rheobyk-440, Rheobyk-M 2600 VF, Rheobyk-H 3300 VF, Rheobyk-H 6500 VF, Rheobyk 7420 ES/ET/CA, Rheobyk-7600, Rheobyk-7610 form BYK, Bentone SD2 and Bentone LT from Elementis, Exilva from Borregård, Crayvallac ultra and Crayvallac LV from Arkema and Borchigel 0621 from Borchers. Preferably the rheology modifier comprises a micronized amide wax and/or a fumed silica and/or a clay. Preferably the rheology modifier is present in the composition of the invention in an amount of 0-10 wt%, more preferably 0.1-6 wt% and still more preferably 0.1-3.0 wt%, based on the total weight of the composition.

Wetting and dispersing agents may be added to the paint composition to for instance facilitate dispersion and wetting of the pigment and filler particles, thus making it easier to break up agglomerates during production, preventing re-flocculation and settling in wet paint as well as formation of Bénard cells in curing paint, reducing the paints viscosity and increasing its colour strength and colour stability. The wetting and dispersing agents may be non-ionic, cationic, anionic or comprise a mixture of the beforementioned. Furthermore, the wetting and dispersing agent may consist of polymers, or non-polymeric organic molecules or a mixture thereof. Preferably the wetting and dispersing agent comprises a polymeric compound. The type of wetting and dispersing agent is not specifically limited and any suitable wetting and dispersing agent can be used.. Non-limiting examples of suitable types of wetting and dispersing agents may be fatty acids, lecithins, polysorbates, polyacrylamides, polyethercarboxylates, polycarboxylates, polyalkylene glycols, polyethers, polyacrylates, alkylolamino amides, polymeric phosphoric acid esters, polyalkylamines. Non-limiting examples of commercially available wetting and dispersing agent may be Anti-Terra-250, Byk-P-104, Byk-153, Byk-154, Disperbyk-102, Disperbyk-106, Disperbyk-109, Disperbyk-142, Disperbyk-161, Disperbyk-180, Disperbyk-182, Disperbyk-184, Disperbyk-185, Disperbyk-187, Disperbyk-190, Disperbyk-191, Disperbyk-192, disperbyk-193, Disperbyk-194 N, Disperbyk-199, Disperbyk-2000, Disperbyk-2010, Disperbyk-2012, disperbyk-2014, Disperbyk-2015, Disperbyk-2018, Disperbyk-2019, Disperbyk 2055, Disperbyk-2059, Disperbyk-2070, Disperbyk 2080, Disperbyk-2152 from BYK.

### Solvents

The coating composition of the present invention is a waterborne composition, i.e. one comprising water as the main solvent.

The coating compositions typically comprise at least 15 wt% water, relative to the total weight of the composition as a whole. Preferably, the compositions comprise 15 to 60 wt% water, more preferably 20 to 50 wt%, such as 25 to 45 wt%, relative to the total weight of the composition as a whole.

Organic solvents are typically also present in the composition, either in one component or in both component A and B. Organic solvents are typically added to a waterborne coating composition to improve freeze-thaw stability and open time, to reduce surface tension and viscosity, and to facilitate film formation. The type of solvent is not specifically limited and any suitable solvent can be used.. Suitable solvents may be, but are not limited to, aromatic hydrocarbons, ketones, esters, alcohols, glycol ethers, ethers and polyethers.

Examples of solvents that may be suitable for use in the composition include toluene, xylene, acetone, methyl ethyl ketone, methyl isobutyl ketone, methyl amyl ketone, methyl isoamyl ketone, ethyl acetate, butyl acetate, 2,2,4-trimethyl-1,3-pentanediol diisobutyrate (Texanol (TM)), ethanol, n-propanol, isopropanol, n-butanol, isobutanol, sec-butanol, tert-butanol, diacetone alcohol, benzyl alcohol, propylene glycol monomethyl ether, propylene glycol propyl ether, propylene glycol n-butyl ether, dipropylene glycol methyl ether, dipropylene glycol n-butyl ether, propylene glycol phenyl ether, tripropylene glycol n-butyl ether, ethylene glycol propyl ether and ethylene glycol butyl ether.

Of the above mentioned solvents, solvents capable of aiding the film formation of a waterborne coating composition are especially preferred. Such solvents are often called coalescing agents or film-forming agents.

In a waterborne coating composition, the applied wet product contains a binder that is dispersed or emulsified in water, as opposed to a solventborne composition in which the binder normally is dissolved in the solvent when the paint is applied. For a waterborne epoxy coating composition to form a continuous coating film, the epoxy resin based binder dispersion particles or emulsion droplets must coalesce and flow together with the amine based curing agent. Coalescing additives or coalescing agents aid this process during drying of the coating film.

Examples of suitable coalescing agents may be 2,2,4-trimethyl-1,3-pentanediol diisobutyrate (Texanol (TM)), benzyl alcohol, propylene glycol n-butyl ether, dipropylene glycol n-butyl ether, propylene glycol phenyl ether, tripropylene glycol n-butyl ether, and diacetone alcohol.

An example of a preferred solvent is benzyl alcohol. Benzyl alcohol may be present alone or in combination with glycol ethers such as, propylene glycol n-butyl ether and dipropylene glycol n-butyl ether.

The composition may comprise 0 to 15 wt% organic solvents, preferably 1 to 10 wt%, most preferred 3 to 9 wt%.

### Applications

The composition as described herein may be prepared in a suitable concentration for use, e.g. in spray painting. In this case, the composition is itself a paint. Alternatively, the composition may be a concentrate for preparation of paint. In this case, further solvent and optionally other components are added to the composition described herein to form paint. Preferred solvents are as hereinbefore described in relation to the composition.

After mixing, and optionally after addition of solvent, the coating composition or paint is preferably filled into a container. Suitable containers include cans, drums and tanks.

The coating composition may be supplied as a one-pack, as a two-pack or as a three-pack. Preferably the composition is supplied as a two-pack.

Thus, the invention further relates to a kit of parts for producing a coating composition as hereinbefore defined, wherein said kit comprises:
(i) a component A comprising at least one epoxy-based binder and water; and
(ii) a component B comprising an amine based curing agent comprising a cyclic structure and a silane, wherein said second part comprises less than 5 wt% water

The coating composition and paint of the invention preferably has a solids content of 40-90 wt%, more preferably 50-80 wt% and still more preferably 55-70 wt%. In terms of solids by volume percent solids (volume solids%), the coating composition and paint of the invention preferably has a solids content of 30 - 80%, more preferably 40 - 75% and still more preferably, 45 - 70%.

Preferably the coating composition and paint of the invention has a content of volatile organic compounds (VOC) of less than 120 g/L, more preferably less than 100 g/L. VOC content can be calculated (ASTM D5201 - 05a(2020) or measured (US EPA method 24 or ISO 11890-1).

Preferably the coating composition and paint of the invention has a pigment volume concentration (PVC) of 20 to 50%, such as 30 to 45%.

The ratio of the sum of epoxy equivalents of the reactive components of Component A to the sum of active hydrogen equivalents of component B of the present invention is preferably in the range of 70:100 to 130:100, more preferably 80: 100 to 120:100.

It is preferable that the two components of the coating composition are formulated such that an even mixing ratio by volume is achieved. By even mixing ratio it is understood that the mixing ratio A:B is such that A is an integer. (e.g 4:1, 3:1, 2:1).

The coating composition of the present invention may be applied to any suitable surface, such as metal substrates such as carbon steel, galvanized steel, stainless steel or aluminum. Furthermore, the coating composition may be applied to metal substrates with a non-optimal surface treatment such as rusted substrates, ultra high pressure water-jetted substrates, substrates containing old paint residues of paint as well as precoated substrates. The composition may also be applied to concrete substrates.

The coating composition according to the present invention may be applied in one or two or more layers.

Viewed from a further aspect the invention provides a coating system comprising at least two layers, wherein one layer is a primer layer made from the coating composition as hereinbefore defined and wherein the one or more additional layers are each selected from the group consisting of a primer made from the coating composition as hereinbefore defined, a shop primer, a mid-coat, a topcoat, a tiecoat, an antifouling coating, a zinc rich primer, and an intumescent coating.

Preferably the primer made from the coating composition as hereinbefore defined is the first coating layer of the system, i.e. is applied directly to the substrate. Optionally the substrate may be pre-treated with a shop primer and/or a zinc rich primer before applying a coating layer consisting of the hereinbefore defined primer composition.

Shop primer, mid-coat, topcoat, tiecoat, antifouling coating, zinc rich primer, and intumescent coating are all well-known terms in the art.

The "topcoat" layer as termed herein refers to a layer which forms the outermost layer of a multilayer paint system. The components from which the topcoat layer is prepared may be selected as appropriate depending on the application of the coating system. For example, where the coating system is intended for external use, a suitable topcoat layer which provides protection from the outdoor environment, such as UV light and/or moisture, can be selected. The topcoat layer may also refer to a coat that is intended for underwater use to prevent the growth of marine organisms. Such coatings are termed antifouling coatings. If an antifouling coating is to be applied to the primer layer, a tiecoat layer between the primer and antifouling layer might be necessary.

In one embodiment, the coating system as defined above comprises layer A and B wherein layer A and/or layer B have been cured.

The coating composition may be cured at ambient and elevated temperatures (e.g. 18 to 40 °C), or at lower temperatures, such as 10 to 18 °C, preferably it can also cure at even lower temperatures such as 5 to 18 °C.

The coating composition of the present invention can be cured at a relative humidity of 40 to 80%, preferably 30 to 85%, more preferred 20 to 90%, and even more preferred 10 to 90%.

The dry film thickness of each of the coating layers of the coating composition of the present invention is preferably 50 to 500 µm, more preferably 75 to 400 µm, most preferably 100 to 300 µm.

The wet film thickness of the coating composition of the invention is preferably 75 to 1000 µm, more preferably 100 to 800 µm, most preferably 125 to 600 µm.

Thus, the invention may further be considered to relate to a coating composition as hereinbefore defined, wherein said composition has a wet film thickness in the range 75 to 1000 µm, and can be cured at a temperature of 5 to 40 °C and a relative humidity of 20 to 90%, preferably 10 to 90%. Sufficient ventilation is always necessary when curing waterborne paints, this is especially true when curing at a high relative humidity.

The invention also relates to substrates coated with a cured coating formed from a coating composition as hereinbefore defined as well as a process for applying a coating composition to a substrate comprising applying, e.g. by spraying, a coating composition as defined herein to a substrate and allowing the coating composition to cure.

The substrate is typically any surface that should be protected by an anticorrosive coating. For example, the surface of a marine structure, preferably a marine structure which is submerged when in use. The surface may be permanently or intermittently underwater (e.g. through tide movement, different cargo loading or swell). Typical marine structures include vessels (including but not limited to boats, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, water-power installations and structures, underwater oil well structures, nets and other aquatic culture installations, and buoys, etc. The surface of the substrate may be the "native" surface (e.g. the steel surface).

Application of the coating composition and paint can be accomplished by any convenient means, e.g. via painting (e.g. with brush or roller) or more preferably spraying the coating onto the article. Typically, the surface will need to be separated from the seawater to allow coating. After the coating is applied, it is preferably dried and cured.

### Examples

The densities, volume percent solids (volume solids%), and the theoretical volatile organic compounds (VOC) content of the compositions were calculated according to ASTM D5201 - 05a(2020).

Pigment volume concentration for the compositions were determined by calculation according to the formula PVC = ((Vp + Vf)/(Vp+Vf+Vb))*100. Where Vp is the volume of pigments, Vf is the volume of fillers, including glass spheres, and Vb is the volume of binders.

Viscosity measurements of resins and curing agents were performed at 23 °C and at a share rate of 10000 s⁻¹, according to ISO 2884-1 :2006 and reported in mPas.

The specific gravity of the coating compositions are theoretical values obtained by calculations.

Accelerated corrosion tests were conducted by applying the coating compositions described in the (tables below) in a wet film thickness corresponding to 2 x 125 µm dry film thickness (DFT) to sandblasted carbon steel panels of dimensions 150 x 75 x 3 mm with a cleanliness of Sa 2½. Before exposure in the accelerated corrosion tests, the coatings were allowed to cure for 14 days at 23 °C, 50%RH.

Seawater immersion testing was conducted in natural seawater at 40 °C, according to ISO 2812-2:2018 (Determination of resistance to liquids - Water immersion method).

Continuous condensation testing was conducted according to ISO 6270-2:2018 at 40 °C.

Neutral salt spray testing was conducted according to ISO 9227:2017 at 35 °C

Hot water immersion testing was conducted in freshwater at 60 °C according to ISO 2812-2:2018 (Determination of resistance to liquids - Water immersion method).

Test results from the accelerated corrosion tests were evaluated according to ISO 4628-2:2016 (Evaluation of degradation of coatings - Designation of quantity and size of defects, and of intensity of uniform changes in appearance, Part 2: Assessment of degree of blistering) and ISO 4628-3:2016 (Part 3: Assessment of degree of rusting), and ISO 4624:2016 (Paints and varnishes - Pull-off test for adhesion). The results were summarized and graded on a scale from 1-4. The grading of the results is based upon the amount and size of defects such as rust spots, underrust and blisters.
1: No defects.
2: Very few defects.
3: High amount of defects. Pull-off adhesion test gives partly adhesive failure between substrate and first coat.
4: Very high amount of defects. Pull-off adhesion test gives complete adhesive failure between substrate and first coat.

### Raw materials used:

| **Materials** | **Details** |
|---|---|
| Bisphenol A epoxy based binder dispersion | The binder dispersion comprise bisphenol A epoxy resin and C12-C14 alkyl glycidyl ether reactive diluent dispersed in water, 53% solids in water, EEW 520-580 g/eq based on solid undiluted resin. |
| Hydrocarbon resin 1 | Hydrocarbon resin based on polymerized aromatic C9-C10 hydrocarbons, OH-functionality 0, viscosity 6000-10000 mPas |
| Hydrocarbon resin 2 | Xylene-formaldehyde resin, OH-functionality 0, viscosity 30-70 mPas. |
| Aminosilane | 3-aminopropyltriethoxysilane |
| Filler 1 | Wollastonite |
| Filler 2 | Nepheline syenite |
| Pigment 1 | Titanium dioxide |
| Hollow glass spheres | Hollow glass spheres, density 0.28 g/cm³, isostatic crush strength of 3000 psi, average diameter 30 µm. |
| Curing agent 1 | Curing agent comprising a ketimine based on polyamines and methyl ethyl ketone, AHEW 76 g/eq |
| Curing agent 2 | Curing agent comprising an amidoamine based on tall-oil fatty acid and ethyleneamines such as TEPA, 100% solids, AHEW 93 g/eq |
| Curing agent 3 | Curing agent comprising a polyamide based on C18 unsaturated fatty acid dimers and DETA and TETA, 100% solids, AHEW 150 g/eq |
| Curing agent 4 | Curing agent comprising an aliphatic polyamine adduct, it is modified to improve compatibility with water, 80% solids in water, AHEW 142 g/eq as supplied |
| Curing agent 5 | Curing agent comprising a benzylamine structural motif. The curing agent comprise a phenalkamine based on MXDA, 100% solids, AHEW 104 g/eq |
| Curing agent 6 | Curing agent comprising a cycloaliphatic amine. The curing agent comprise an amine-epoxy adduct of IPDA, 74wt% solids in BnOH, AHEW 100 g/eq as supplied |
| Curing agent 7 | Curing agent comprising a benzylamine structural motif. The curing agent comprise the reaction products of styrene and MXDA, 100% solids, AHEW 103 g/eq |
| Curing agent 8 | Curing agent comprising a benzylamine structural motif. The curing agent comprise a benzylated polyalkylene polyamine, 100% solids, AHEW 95 g/eq |
| Curing agent 9 | Curing agent comprising a benzylamine structural motif. The curing agent comprise a reaction product of phenol, formaldehyde and MXDA, 55% solids in BnOH, AHEW 88 g/eq |
| Flash rust preventative | Sodium nitrite |
| Anticorrosive pigment | Calcium phosphate based anticorrosive pigment |
| Dispersing agent* | Styrene-maleic acid copolymer |
| Rheology modifier 1* | Polyurethane based low shear thickener |
| Rheology modifier 2* | Acrylic medium shear thickener |
| Rheology modifier 3* | Micronized amide wax |
| Defoamer* | Polysiloxane based defoamer |
| Substrate wetting agent* | Polyether modified polysiloxane surfactant |

| | |
|---|---|
| *combined as "Additives" in Table 1 and Table 2 | |

### Preparation of coating composition

Preparation of the coating composition is usually done by employing a dissolver, although other suitable preparation methods, such as in-line mixing, can also be used. Below is an example of how to prepare the paint by using a dissolver.

For preparation of component A, a suitable amount of epoxy binder is added to a vessel and mixed with a solution of wetting and dispersing agent and water. Fillers, pigments and any anti-corrosive pigments are then added to the vessel while stirring. This mixture makes up the milling-base. The speed of the dissolver-blade is increased to impart enough shear-force on the mill-base as to ensure a good grinding efficiency. The rheology modifier is then added, if suitable for addition, and stable, at high shear forces. Optionally, a defoamer is added to the grinding step to prevent a build-up of air bubbles/foam in the mill-base.
When the fineness of grind is deemed suitable for the paint the speed of the dissolver blade is reduced and more water is added as to thin the mixture. Additives such as defoamers, surface-tension additives, biocides, flash rust inhibitors and rheology modifiers are then added, in addition to more water and the rest for the epoxy binder. Any organic solvents, or other raw materials that are deemed suitable for the formulation such as hollow glass spheres, tinters, hydrocarbon resins, diluents and silanes, can be added at any appropriate time during the manufacturing process.

For preparation of component B, the curing agent and silane is simply mixed in a vessel, optionally with organic solvents, diluents, and/or hydrocarbon resins, or other raw materials deemed suitable. If pigments, fillers and/or hollow glass spheres are to be included in component B a suitable rheology modifier should be employed to increase the storage stability of the component, i.e to stabilize the glass spheres so that these do not float to the surface of the mixture.

In one preferred embodiment micronized amide wax is used as a rheology modifier, in which the manufacturing process of component B will typically be as described below. Hydrocarbon resin is added to a vessel and mixed with a suitable solvent. Polyamide wax is then added and stirred into the mixture for 5-10 minutes. Extenders and/or pigments are added to the mixture to make up the mill-base and to achieve a suitable volume and viscosity for grinding. The speed of the dissolver-blade is then increased to impart enough shear-force on the mixture as to ensure a good grind efficiency and to increase the temperature of the mixture to the activation temperature of the polyamide wax, typically between 45 °C and 65 °C. A defoamer may optionally be added to prevent the build-up of air-bubbles or foam in the mixture. When a temperature suitable for activation of the polyamide wax has been reached the speed of the dissolver is reduced so that the shear force exerted on the paint keeps the temperature stable inside a temperature range suitable for the activation process. The mixture is then stirred for 10-15minutes, while activating the polyamide wax. Solvents are then added to reduce the viscosity and temperature of the paint before adding curing agent(s) and silanes(s). Lastly the hollow glass spheres are stirred into the mixture at a suitable mixing speed to ensure an even incorporation and to prevent any structural damage to the spheres. Any other raw materials deemed suitable for the coating composition may be added at any appropriate time during the manufacturing process.

**Table 1: Inventive and Comparative compositions (amounts are in parts by weight)**

| | IE1 | IE2 | IE3 | IE4 | IE5 | IE6 | CE1 | CE2 | CE3 | CE4 | CE5 |
|---|---|---|---|---|---|---|---|---|---|---|---|
| | Component A | | | | | | | | | | |
| Bisphenol A epoxy based binder dispersion | 53 | 51 | 51 | 52 | 50 | 67 | 51 | 48 | 52 | 52 | 53 |
| Water | 9.96 | 11.96 | 11.96 | 10.96 | 12.96 | 7.1 | 11.96 | 14.96 | 10.96 | 10.96 | 9.96 |
| Pigment 1 | 9 | 9 | 9 | 9 | 9 | | 9 | 9 | 9 | 9 | 9 |
| Filler 1 | 16 | 16 | 16 | 16 | 16 | 13 | 16 | 16 | 16 | 16 | 16 |
| Filler 2 | 7 | 7 | 7 | 7 | 7 | 5.6 | 7 | 7 | 7 | 7 | 7 |
| Anticorrosive pigment | 3.5 | 3.5 | 3.5 | 3.5 | 3.5 | 3.2 | 3.5 | 3.5 | 3.5 | 3.5 | 3.5 |
| Flash rust preventative | 0.04 | 0.04 | 0.04 | 0.04 | 0.04 | 0.05 | 0.04 | 0.04 | 0.04 | 0.04 | 0.04 |
| Additives | 1.5 | 1.5 | 1.5 | 1.5 | 1.5 | 4.05 | 1.5 | 1.5 | 1.5 | 1.5 | 1.5 |
| SUM Component A | 100 | 100 | 100 | 100 | 100 | 100 | 100 | 100 | 100 | 100 | 100 |

| | Component B | | | | | | | | | | |
|---|---|---|---|---|---|---|---|---|---|---|---|
| Curing agent 1 | | | | | | | | | | 2.77 | |
| Curing agent 2 | | | | | | | | | 3.39 | | |
| Curing agent 3 | | | | | | | | 4.87 | | | |
| Curing agent 4 | | | | | | | 5.01 | | | | |
| Curing agent 5 | | | | | 3.59 | | | | | | |
| Curing agent 6 | | | | 3.65 | | | | | | | |
| Curing agent 7 | | | 3.65 | | | | | | | | |
| Curing agent 8 | | 3.37 | | | | | | | | | |
| Curing agent 9 | 3.3 | | | | | 4.15 | | | | | 4.28 |
| Aminosilane | 1.33 | 1.35 | 1.35 | 1.34 | 1.35 | 1.72 | 1.37 | 1.37 | 1.34 | 1.34 | |
| Benzyl alcohol | 2.46 | 4 | 4.01 | 3.02 | 4.01 | 3.4 | 4.07 | 4.06 | 3.3 | 3.98 | 2.46 |
| Hydrocarbon resin 1 | | | | | | 7.92 | | | | | |
| Dipropylene glycol n-butyl ether | | | | | | 1.68 | | | | | |
| Additives | | | | | | 0.17 | | | | | |
| Pigment 1 | | | | | | 13.08 | | | | | |
| Hollow glass spheres | | | | | | 5.23 | | | | | |
| SUM Component B | 7.09 | 8.72 | 9.01 | 8.01 | 8.95 | 37.35 | 10.45 | 10.3 | 8.03 | 8.09 | 6.74 |
| SUM TOTAL | 107.09 | 108.72 | 109.01 | 108.01 | 108.95 | 137.35 | 110.45 | 110.3 | 108.3 | 108.09 | 106.74 |
| | | | | | | | | | | | |
| % Volume solids | 49 | 49 | 49 | 49 | 49 | 60 | 49 | 49 | 49 | 49 | 49 |
| Density | 1.36 | 1.34 | 1.34 | 1.35 | 1.34 | 1.13 | 1.34 | 1.33 | 1.35 | 1.35 | 1.36 |
| Grams of volatile organic compounds per litre | 85 | 82 | 82 | 83 | 81 | 86 | 82 | 79 | 83 | 86 | 91 |
| | | | | | | | | | | | |
| Pigment volume concentration (PVC) | 31 | 30 | 30 | 30 | 30 | 42 | 30 | 30 | 30 | 31 | 32 |
| Ratio of epoxy equivalents to active hydrogen equivalents | 100:97 | 100:97 | 100:97 | 100:97 | 100:97 | 100:97 | 100:97 | 100:97 | 100:97 | 100:97 | 100:95 |
| Mixing ratio by weight (gram A : B) | 100:7.09 | 100:8.72 | 100:9.01 | 100:8.01 | 100:8.95 | 100:37.35 | 100:10.45 | 100:10.3 | 100:8.03 | 100:8.09 | 100:6.74 |

| | Results | | | | | | | | | | |
|---|---|---|---|---|---|---|---|---|---|---|---|
| Seawater, 40 °C, 1 month | 1 | 1 | 1 | 1 | 1 | N/A | 4 | 4 | 1 | 4 | N/A |
| Continuous condensation, 1 month | 1 | 1 | 1 | 1 | 1 | N/A | 1 | 4 | 1 | 3 | 4⁽¹ |
| Salt spray, 1 month | 1 | 1 | 1 | 1 | 1 | N/A | 1 | 4 | 1 | 3 | 4⁽¹ |
| Seawater, 40 °C, 6 months | 1 | 1 | 1 | 1 | 1 | 1 | 4 | 4 | 3 | 4 | N/A |
| Continuous condensation, 6 months | 1 | 1 | 1 | 1 | 1 | 1 | 1 | 4 | 1 | 3 | N/A |
| Salt spray, 6 months | 1 | 1 | 1 | 1 | 1 | 1 | 1 | 4 | 2 | 4 | N/A |
| Hot-water, 60 °C, 2 months | 1 | 1 | 1 | 3 | 1 | N/A | 3 | 4 | 3 | 4 | 4⁽¹ |
| Salt spray 6 months on water jetted carbon steel | N/A | N/A | N/A | N/A | N/A | 1 | N/A | N/A | N/A | N/A | N/A |
| Continuous condensation 6 months on water jetted carbon steel | N/A | N/A | N/A | N/A | N/A | 1 | N/A | N/A | N/A | N/A | N/A |

| | | | | | | | | | | | |
|---|---|---|---|---|---|---|---|---|---|---|---|
| 1) Tests were ended after 12 days (60 °C fresh water immersion) and 17 days (salt spray, continuous condensation) due to detectable defects - Blisters, underrust and adhesion failure. | | | | | | | | | | | |

The anticorrosive performance of the formulations IE1-6 and CE1-5 is shown in Table 1. To ensure sufficient anti-corrosive performance, a coating composition should be able to withstand accelerated corrosion tests such as the continuous condensation test (ISO 6270:2018) for at least one month. The salt-spray test (ISO 9227:2017), the seawater immersion test and hot water immersion tests (ISO 2812:2018), should be endured for at least 2 months. Preferably, the seawater immersion, continuous condensation and salt-spray tests should be endured 6 months. The passing criteria for these tests are no visible defects such as blisters, or rust spots in the film at the end of the test period. Hence, a grading of 1 in the scale from 1-4 is required to consider the test as passed and the formulation suitable for use as a high performing anticorrosive coating.

The composition in IE6 was also further tested on steel panels that had been water jetted. The test results show that the coating composition according to the present invention adheres well to the flash rusted water jetted substrate and protects it from further corrosion during the accelerated corrosion testing, thus the composition can be said to have a high surface tolerance. The test results show that the coating composition of the invention provides excellent corrosion protection and should be suitable for use in marine environments such as on submerged structures.

### Corrosion testing of paint cured at 5 °C and 85% relative humidity

Curing waterborne epoxy-paints at low temperatures and high relative humidity often leads to improper film formation and thus a low corrosion protection. Test results from corrosion testing of a system of two coats of a coating composition according to the invention and one coat of a topcoat is shown in Table 2.

Two coats of primer (2 x 125 µm dry film thickness (DFT)) and one coat of a commercially available waterborne polyurethane topcoat (1 × 75 µm DFT) were applied to Sa 2½ grade steel panels. The total DFT was measured to be around on average 325 µm. The overcoating interval was 24 hours for each of the coating layers and the paint was cured at 5 °C and 85% relative humidity for a further 14 days before exposing the paint to the accelerated corrosion tests salt-spray (ISO 9227:2017) and continuous condensation (ISO 6270:2018) for two months. The formulation of the primer was the same as for the example IE6 listed in Table 1 except for the use of a different hydrocarbon resin.

**Table 2: Anticorrosive test results of IE7**

| | IE7 |
|---|---|
| | Component A |
| Bisphenol A epoxy based binder dispersion | 67 |
| Water | 7.1 |
| Filler 1 | 13 |
| Filler 2 | 5.6 |
| Anticorrosive pigment | 3.2 |
| Flash rust preventative | 0.05 |
| Additives | 4.05 |
| SUM Component A | 100 |

| | Component B |
|---|---|
| Curing agent 9 | 4.15 |
| Aminosilane | 1.72 |
| Benzyl alcohol | 3.4 |
| Hydrocarbon resin 2 | 7.92 |
| Dipropylene glycol n-butyl ether | 1.68 |
| Additives | 0.17 |
| Pigment 1 | 13.08 |
| Hollow glass spheres | 5.23 |
| SUM Component B | 37.35 |
| SUM TOTAL | 137.35 |
| | |
| % Volume solids | 60 |
| Density | 1.13 |
| Grams of volatile organic compounds per liter | 86 |
| Pigment volume concentration (PVC) | 42 |
| Ratio of epoxy equivalents to active hydrogen equivalents | 100:97 |
| Mixing ratio by weight (gram A : B) | 100:37.35 |

| Results | |
|---|---|
| Continuous condensation, 2 month | 1 |
| Salt spray, 2 month | 1 |

The test results show that the coating composition of the invention provides excellent corrosion protection in a system with a topcoat, even when cured in a challenging curing condition with low temperature and high relative humidity.

## Claims

1. A coating composition comprising components A and B,
wherein component A comprises:
i) 15 to 70 wt% of one or more epoxy-based binder, relative to the total weight of component A;
ii) 20 to 60 wt% water, relative to the total weight of component A;
wherein component B comprises:
i) an amine based curing agent comprising a cyclic structure; and
ii) a silane
and wherein component B comprises less than 5 wt% water, relative to the total weight of component B.

2. The coating composition as claimed in claim 1, wherein said epoxy-based binder has an epoxy equivalent weight (EEW) of 250 to 1500 g/eq, preferably 350 to 1000 g/eq, more preferably 400 to 800 g/eq, even more preferably 425 to 600 g/eq.

3. The coating composition as claimed in claim 1 or 2, wherein said epoxy-based binder is a bisphenol type epoxy resin, preferably a bisphenol A epoxy based resin or a bisphenol F epoxy based resin.

4. The coating composition as claimed in any of claims 1 to 3, wherein component A further comprises a silane, preferably an epoxy functional silane.

5. The coating composition as claimed in any of claims 1 to 4, wherein said amine based curing agent is not a hydrophilic modified curing agent.

6. The coating composition as claimed in any of claims 1 to 5, wherein said amine based curing agent is not an aqueous solution or suspension.

7. The coating composition as claimed in any of claims 1 to 6, wherein said amine based curing agent has an active hydrogen equivalent weight (AHEW) of 40 to 300 g/eq, preferably 60 to 150 g/eq, more preferably 80 to 110 g/eq.

8. The coating composition as claimed in any of claims 1 to 7, wherein said amine based curing agent comprises a benzyl amine motif.

9. The coating composition as claimed in any of claims 1 to 7, wherein said amine based curing agent is a cyclic amine epoxy adduct.

10. The coating composition as claimed in any of claims 1 to 9, wherein said silane in component B is an amino functional silane.

11. The coating composition as claimed in any of claims 1 to 10, wherein component B comprises 3 to 80 wt% of the amine based curing agent, relative to the total weight of component B.

12. The coating composition as claimed in any of claims 1 to 11, wherein component B comprises 2 to 30 wt% of the silane, relative to the total weight of component B.

13. The coating composition as claimed in any of claims 1 to 12, wherein the composition comprises 1.0 to 10 wt% hollow, spherical, filler particles, relative to the total weight of the composition, wherein said hollow, spherical, filler particles are preferably in component B.

14. A kit for producing a coating composition as claimed in any of claims 1 to 13, wherein said kit comprises:
(i) a component A comprising one or more epoxy-based binders and water; and
(ii) a component B comprising an amine based curing agent comprising a cyclic structure and a silane, wherein said second part comprises less than 5 wt% water, relative to the total weight of the second part.

15. A coating system comprising at least two layers, wherein one layer is a primer layer made from the coating composition as claimed in any of claims 1 to 13 and wherein the one or more additional layers are each selected from the group consisting of a primer made from the coating composition as claimed in any of claims 1 to 13, a shop primer, a mid-coat, a topcoat, a tie coat, an antifouling coating, a zinc rich primer, and an intumescent coating.

16. The coating system as claimed in claim 15, wherein layer A and/or layer B have been cured.

17. A substrate coated with a cured coating composition as claimed in any of claims 1 to 13.

## Patentansprüche

1. Beschichtungszusammensetzung, umfassend Komponenten A und B,
wobei Komponente A umfasst:
i) 15 bis 70 Gew.-% eines oder mehrerer Bindemittel auf Epoxidbasis, bezogen auf das Gesamtgewicht der Komponente A;
ii) 20 bis 60 Gew.-% Wasser, bezogen auf das Gesamtgewicht der Komponente A;
wobei Komponente B umfasst:
i) ein Härtungsmittel auf Aminbasis, das eine zyklische Struktur umfasst; und
ii) ein Silan
und wobei Komponente B weniger als 5 Gew.-% Wasser umfasst, bezogen auf das Gesamtgewicht von Komponente B.

2. Beschichtungszusammensetzung nach Anspruch 1, wobei das Bindemittel auf Epoxidbasis ein Epoxidäquivalentgewicht (EEW) von 250 bis 1500 g/eq, vorzugsweise 350 bis 1000 g/eq, bevorzugter 400 bis 800 g/eq, noch bevorzugter 425 bis 600 g/eq aufweist.

3. Beschichtungszusammensetzung nach Anspruch 1 oder 2, wobei das Bindemittel auf Epoxidbasis ein Epoxidharz vom Bisphenol-Typ ist, vorzugsweise ein Epoxidharz auf Bisphenol-A-Basis oder ein Epoxidharz auf Bisphenol-F-Basis.

4. Beschichtungszusammensetzung nach einem der Ansprüche 1 bis 3, wobei Komponente A weiter ein Silan, vorzugsweise ein epoxidfunktionelles Silan, umfasst.

5. Beschichtungszusammensetzung nach einem der Ansprüche 1 bis 4, wobei das Härtungsmittel auf Aminbasis kein hydrophil modifiziertes Härtungsmittel ist.

6. Beschichtungszusammensetzung nach einem der Ansprüche 1 bis 5, wobei das Härtungsmittel auf Aminbasis keine wässrige Lösung oder Suspension ist.

7. Beschichtungszusammensetzung nach einem der Ansprüche 1 bis 6, wobei das Härtungsmittel auf Aminbasis ein aktives Wasserstoffäquivalentgewicht (AHEW) von 40 bis 300 g/eq, vorzugsweise 60 bis 150 g/eq, bevorzugter 80 bis 110 g/eq aufweist.

8. Beschichtungszusammensetzung nach einem der Ansprüche 1 bis 7, wobei das Härtungsmittel auf Aminbasis ein Benzylamin-Motiv umfasst.

9. Beschichtungszusammensetzung nach einem der Ansprüche 1 bis 7, wobei das Härtungsmittel auf Aminbasis ein zyklisches Amin-Epoxid-Addukt ist.

10. Beschichtungszusammensetzung nach einem der Ansprüche 1 bis 9, wobei das Silan in Komponente Bein aminofunktionelles Silan ist.

11. Beschichtungszusammensetzung nach einem der Ansprüche 1 bis 10, wobei Komponente B 3 bis 80 Gew.-% des Härtungsmittels auf Aminbasis umfasst, bezogen auf das Gesamtgewicht von Komponente B.

12. Beschichtungszusammensetzung nach einem der Ansprüche 1 bis 11, wobei Komponente B 2 bis 30 Gew.-% des Silans umfasst, bezogen auf das Gesamtgewicht der Komponente B.

13. Beschichtungszusammensetzung nach einem der Ansprüche 1 bis 12, wobei die Zusammensetzung 1,0 bis 10 Gew.-% hohle, kugelförmige Füllstoffpartikel umfasst, bezogen auf das Gesamtgewicht der Zusammensetzung, wobei sich die hohlen, kugelförmigen Füllstoffpartikel vorzugsweise in Komponente B befinden.

14. Kit zur Herstellung einer Beschichtungszusammensetzung nach einem der Ansprüche 1 bis 13, wobei das Kit umfasst:
(i) eine Komponente A, die ein oder mehrere Bindemittel auf Epoxidbasis und Wasser umfasst; und
(ii) eine Komponente B, die ein Härtungsmittel auf Aminbasis mit einer zyklischen Struktur und ein Silan umfasst, wobei der zweite Teil weniger als 5 Gew.-% Wasser umfasst, bezogen auf das Gesamtgewicht des zweiten Teils.

15. Beschichtungssystem, das mindestens zwei Schichten umfasst, wobei eine Schicht eine Grundierungsschicht aus der Beschichtungszusammensetzung nach einem der Ansprüche 1 bis 13 ist und wobei die eine oder mehreren zusätzlichen Schichten jeweils aus der Gruppe ausgewählt sind, die aus einer Grundierung aus der Beschichtungszusammensetzung nach einem der Ansprüche 1 bis 13, einer Werkstattgrundierung, einer Zwischenschicht, einer Deckschicht, einer Haftschicht, einer fäulnishemmenden Beschichtung, einer zinkreichen Grundierung und einer feuerhemmenden Beschichtung besteht.

16. Beschichtungssystem nach Anspruch 15, wobei Schicht A und/oder Schicht B ausgehärtet sind.

17. Substrat, das mit einer ausgehärteten Beschichtungszusammensetzung nach einem der Ansprüche 1 bis 13 beschichtet ist.

## Revendications

1. Composition de revêtement comprenant les composants A et B,
dans laquelle le composant A comprend :
i) 15 à 70 % en poids d'un ou plusieurs liants à base d'époxy, par rapport au poids total du composant A ;
ii) 20 à 60 % en poids d'eau, par rapport au poids total du composant A ;
dans laquelle le composant B comprend :
i) un agent de durcissement à base d'amine comprenant une structure cyclique ; et
ii) un silane
et dans laquelle le composant B comprend moins de 5 % en poids d'eau, par rapport au poids total du composant B.

2. Composition de revêtement selon la revendication 1, dans laquelle ledit liant à base d'époxy présente un poids équivalent d'époxy (EEW) de 250 à 1 500 g/eq, de préférence 350 à 1 000 g/eq, plus préférentiellement 400 à 800 g/eq, encore plus préférentiellement 425 à 600 g/eq.

3. Composition de revêtement selon la revendication 1 ou 2, dans laquelle ledit liant à base d'époxy est une résine époxy de type bisphénol, de préférence une résine époxy à base de bisphénol A ou une résine époxy à base de bisphénol F.

4. Composition de revêtement selon l'une quelconque des revendications 1 à 3, dans laquelle le composant A comprend en outre un silane, de préférence un silane fonctionnel époxy.

5. Composition de revêtement selon l'une quelconque des revendications 1 à 4, dans laquelle ledit agent de durcissement à base d'amine n'est pas un agent de durcissement modifié hydrophile.

6. Composition de revêtement selon l'une quelconque des revendications 1 à 5, dans laquelle ledit agent de durcissement à base d'amine n'est pas une solution ou une suspension aqueuse.

7. Composition de revêtement selon l'une quelconque des revendications 1 à 6, dans laquelle ledit agent de durcissement à base d'amine présente un poids équivalent d'hydrogène actif (AHEW) de 40 à 300 g/eq, de préférence 60 à 150 g/eq, plus préférentiellement 80 à 110 g/eq.

8. Composition de revêtement selon l'une quelconque des revendications 1 à 7, dans laquelle ledit agent de durcissement à base d'amine comprend un motif benzylamine.

9. Composition de revêtement selon l'une quelconque des revendications 1 à 7, dans laquelle ledit agent de durcissement à base d'amine est un adduit époxy d'amine cyclique.

10. Composition de revêtement selon l'une quelconque des revendications 1 à 9, dans laquelle ledit silane dans le composant B est un silane fonctionnel amino.

11. Composition de revêtement selon l'une quelconque des revendications 1 à 10, dans laquelle le composant B comprend 3 à 80 % en poids de l'agent de durcissement à base d'amine, par rapport au poids total du composant B.

12. Composition de revêtement selon l'une quelconque des revendications 1 à 11, dans laquelle le composant B comprend 2 à 30 % en poids du silane, par rapport au poids total du composant B.

13. Composition de revêtement selon l'une quelconque des revendications 1 à 12, dans laquelle la composition comprend 1,0 à 10 % en poids de particules de charge creuses et sphériques, par rapport au poids total de la composition, dans laquelle lesdites particules de charge creuses et sphériques sont de préférence dans le composant B.

14. Kit pour produire une composition de revêtement selon l'une quelconque des revendications 1 à 13, dans lequel ledit kit comprend :
(i) un composant A comprenant un ou plusieurs liants à base d'époxy et de l'eau ; et
(ii) un composant B comprenant un agent de durcissement à base d'amine comprenant une structure cyclique et un silane, dans lequel ladite seconde partie comprend moins de 5 % en poids d'eau, par rapport au poids total de la seconde partie.

15. Système de revêtement comprenant au moins deux couches, dans lequel une couche est une couche d'apprêt fabriquée à partir de la composition de revêtement selon l'une quelconque des revendications 1 à 13 et dans lequel les une ou plusieurs couches supplémentaires sont chacune choisies dans le groupe consistant en un apprêt fabriqué à partir de la composition de revêtement selon l'une quelconque des revendications 1 à 13, un apprêt d'atelier, une couche intermédiaire, une couche de finition, une couche de liaison, un revêtement antisalissure, un apprêt riche en zinc et un revêtement intumescent.

16. Système de revêtement selon la revendication 15, dans lequel la couche A et/ou la couche B a été durcie.

17. Substrat revêtu d'une composition de revêtement durcie selon l'une quelconque des revendications 1 à 13.
